(19) Europäisches Patentamt / European Patent Office / Office européen des brevets

(11) **EP 1 846 778 B1**

(12) **FASCICULE DE BREVET EUROPEEN**

(45) Date de publication et mention
de la délivrance du brevet:
**29.10.2008 Bulletin 2008/44**

(21) Numéro de dépôt: **05716615.9**

(22) Date de dépôt: **01.02.2005**

(51) Int Cl.:
***G01S 3/74*** $^{(2006.01)}$

(86) Numéro de dépôt international:
**PCT/EP2005/050430**

(87) Numéro de publication internationale:
**WO 2006/081871 (10.08.2006 Gazette 2006/32)**

(54) **PROCEDE DE GONIOMETRIE EN 1D OU 2D DE SOURCES DIFFUSES**

1D- ODER 2D-GONIOMETRIEVERFAHREN DIFFUSER QUELLEN

1D OR 2D GONIOMETRY METHOD OF DIFFUSE SOURCES

(84) Etats contractants désignés:
**DE DK FI GB SE**

(43) Date de publication de la demande:
**24.10.2007 Bulletin 2007/43**

(73) Titulaire: **THALES**
**92200 Neuilly sur Seine (FR)**

(72) Inventeurs:
• **FERREOL, Anne,**
**MARKS & CLERK FRANCE**
**F-94117 CX ARCUEIL (FR)**
• **VIBERT, Blandine,**
**MARKS & CLERK FRANCE**
**F-94117 CX ARCUEIL (FR)**
• **MORGAND, Philippe,**
**MARKS & CLERK FRANCE**
**F-94117 CX ARCUEIL (FR)**

(74) Mandataire: **Dudouit, Isabelle**
**Marks & Clerk France**
**31-33 Avenue Aristide Briand**
**94117 Arcueil Cedex (FR)**

(56) Documents cités:
• VALAEE S ET AL: "PARAMETRIC LOCALIZATION OF DISTRIBUTED SOURCES" IEEE TRANSACTIONS ON SIGNAL PROCESSING, IEEE, INC. NEW YORK, US, vol. 43, no. 9, 1 septembre 1995 (1995-09-01), pages 2144-2153, XP000536025 ISSN: 1053-587X cité dans la demande

• ASZTELY D ET AL: "A generalized array manifold model for local scattering in wireless communications" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, vol. 5, 21 avril 1997 (1997-04-21), pages 4021-4024, XP010226684 ISBN: 0-8186-7919-0 cité dans la demande

• JANTTI T-P ED - INSTITUTE OF ELECTRICAL AND ELECTRONICS ENGINEERS: "The influence of extended sources on the theoretical performance of the MUSIC and ESPRIT methods: narrow-band sources" DIGITAL SIGNAL PROCESSING 2, ESTIMATION, VLSI. SAN FRANCISCO, MAR. 23, vol. VOL. 5 CONF. 17, 23 mars 1992 (1992-03-23), pages 429-432, XP010058769 ISBN: 0-7803-0532-9

• SHAHBAZPANAHI S ET AL: "Parametric localization of multiple incoherently distributed sources using covariance fitting" SENSOR ARRAY AND MULTICHANNEL SIGNAL PROCESSING WORKSHOP PROCEEDINGS, 2002 4-6 AUG. 2002, PISCATAWAY, NJ, USA, IEEE, 4 août 2002 (2002-08-04), pages 332-336, XP010635765 ISBN: 0-7803-7551-3

• BENGTSSON M, BJÖRN O: "Low-complexity estimators for distributed sources" IEEE TRANSACTIONS ON SIGNAL PROCESSING, vol. 48, août 2000 (2000-08), pages 2185-2194, XP002347119

**Description**

La présente invention concerne un procédé de goniométrie d'une ou de plusieurs sources radio-électriques diffuses, la source de direction donnée étant considérée par les récepteurs comme un cône de diffusion avec une certaine largeur et une incidence moyenne.

Une source diffuse est définie notamment comme une source qui se propage au travers d'un continuum de diffuseurs.

L'invention permet notamment de localiser en angles et/ou en azimut une ou plusieurs sources radio-électriques diffuses. Elle a pour objet par exemple de déterminer l'incidence des centres des cônes de diffusions ainsi que leurs largeurs.

La goniométrie est réalisée soit en une dimension, 1D, où les incidences sont paramétrées par l'azimut, soit en deux dimensions,2D, où l'incidence dépend des deux paramètres azimut et site.

Elle s'applique par exemple pour des signaux cohérents décorrélés ou partiellement corrélés provenant de diffuseurs.

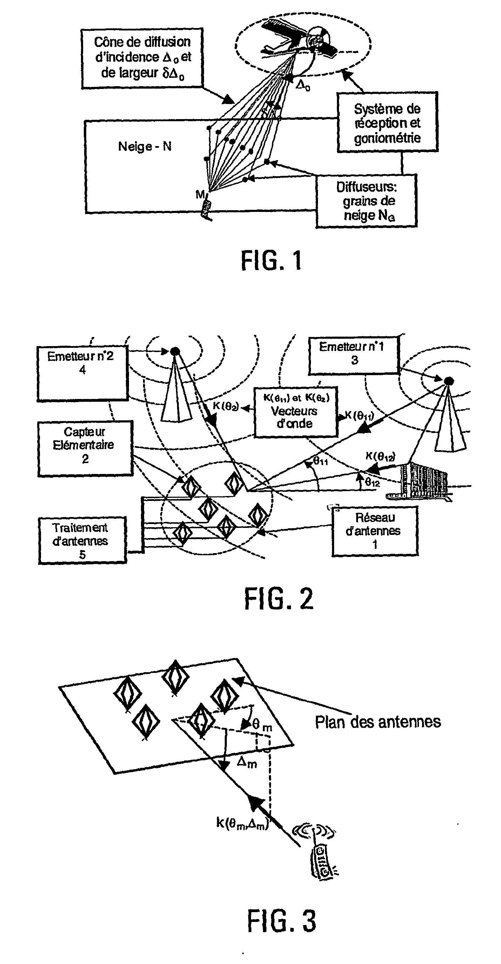

La figure 1 schématise l'exemple de diffusion de l'onde d'un téléphone mobile M au travers d'une couche de neige $N_G$, par exemple vers les récepteurs Ci du système de réception d'un avion A. Le cône dit cône de diffusion a une certaine largeur et une incidence moyenne. Les grains de neige $N_G$ jouent le rôle de diffuseurs.

Dans le domaine du traitement d'antennes, un système de plusieurs antennes reçoit un ou plusieurs émetteurs de radiocommunication. Le traitement d'antennes exploite donc les signaux provenant de plusieurs capteurs. Dans un contexte électromagnétique, les capteurs sont des antennes. La figure 2 montre que tout système de traitement d'antennes est composé d'un réseau 1 avec plusieurs antennes 2 (ou capteurs élémentaires) recevant les multi-trajets de plusieurs émetteurs radio-électrique 3, 4, sous des angles d'incidence différents et un dispositif de traitement d'antennes 5. On définit par « source » un multi-trajet d'un émetteur. Les antennes du réseau reçoivent les sources avec une phase et une amplitude dépendant de leur angle d'incidence ainsi que de la position des antennes. Les angles d'incidences peuvent être paramétrés, soit en 1D en azimut $\theta_m$, soit en 2D en azimut $\theta_m$ et élévation $\Delta_m$. La figure 3 montre qu'une goniométrie s'effectue en 1D lorsque les ondes des émetteurs se propagent dans un même plan et qu'il faut appliquer une goniométrie 2D dans les autres cas. Ce plan P peut être celui du réseau d'antenne où l'angle d'élévation est nul.

Les techniques de traitement d'antennes ont pour objectif principal d'exploiter la diversité spatiale, à savoir l'utilisation de la position spatiale des antennes du réseau pour mieux exploiter les divergences en incidence et distance des sources. Plus particulièrement, la goniométrie ou la localisation de sources radio-électriques a pour objectif d'estimer les angles d'incidences des émetteurs à partir d'un réseau d'antennes.

Classiquement, les algorithmes de goniométrie tels que MUSIC décrit par exemple dans la référence [1] (la liste des références est annexée) supposent que chaque émetteur se propage suivant un nombre discret de sources vers les récepteurs d'écoute. L'onde se propage soit avec un trajet direct soit suivant un nombre discret de multi-trajets. Sur la figure 2, le premier émetteur référencé 3 se propage suivant 2 trajets d'incidences $\theta_{11}$ et $\theta_{12}$ et le deuxième émetteur référencé 4 suivant un trajet direct d'incidence $\theta_2$. Pour estimer les incidences de l'ensemble de ces sources discrètes il faut que leur nombre soit strictement inférieur au nombre de capteurs. Pour des sources ayant des cônes de diffusion de largeur non nul, les méthodes de goniométrie décrites dans le document [1] se dégradent à cause de l'inadéquation du modèle de signal.

Les références [2] [3] [4] proposent des solutions pour la goniométrie de sources diffuses. Toutefois les algorithmes de goniométrie proposés sont uniquement en azimut : 1D. D'autre part, les signaux temporels des diffuseurs provenant d'un même cône sont considérés, soit cohérents dans les références [2] et [3], soit incohérents dans les références [3] [4]. Physiquement les signaux des diffuseurs sont cohérents lorsqu'ils ne sont pas décalés temporellement et ne présentent pas de décalage doppler. A contrario, ces signaux sont incohérents lorsqu'ils sont fortement décalés dans le temps ou qu'ils présentent un décalage doppler important. Le décalage temporel des diffuseurs dépend de la longueur du chemin que suivent les ondes en passant par les diffuseurs et le doppler dépend de la vitesse de déplacement de l'émetteur ou des récepteurs. Ces remarques montrent que les références [2] [3] [4] ne traitent pas le cas intermédiaire le plus courant de diffuseurs dont les signaux sont partiellement corrélés. De plus, les algorithmes [2] [4] dépendent fortement d'un « a priori » sur la densité de probabilité des cônes de diffusion en angle. Il suffit alors que ces densités soient légèrement différentes de 1' « a priori » pour que les algorithmes [2] [4] ne soient plus adaptés.

L'objet de l'invention concerne notamment des sources diffuses qui sont reçues par le système d'écoute dans un cône dit de diffusion ayant une certaine largeur et une incidence moyenne tel que décrit par exemple à la figure 1.

Dans ce document, le mot « source » désigne un multi-trajet par diffusion d'un émetteur, la source étant vue par les récepteurs dans un cône de diffusion d'une certaine largeur et une incidence moyenne. L'incidence moyenne est définie notamment par la direction de la source.

L'invention concerne un procédé de goniométrie d'une ou de plusieurs sources diffuses de directions données, la ou les sources étant caractérisées par une ou plusieurs directions données et par un cône de diffusion. Il est caractérisé en ce qu'il comporte au moins les les étapes suivantes :

a) décomposer le cône de diffusion en un nombre fini L de diffuseurs, à un diffuseur sont associés les paramètres ($\theta_{mp}$, $\delta\theta_{mpi}$, $\Delta_{mp}$, $\delta\Delta_{mpi}$), où $\theta_{mp}$, est l'angle d'incidence en azimuth pour le mième émetteur et le pième multitrajets, $\delta\theta_{mpi}$, est le décalage d'angle d'incidence en azimuth pour le mième émetteur et le pième multitrajets et le ième diffuseur, $\Delta_{mp}$, l'angle d'incidence en élévation pour le mième émetteur et le pième multitrajets, et $\delta\Delta_{mpi}$ le décalage d'angle d'incidence en élévation pour le mième émetteur et le pième multitrajets et le ième diffuseur, la décomposition étant effectuée en mettant en oeuvre

$$\mathbf{x}_{mp}(t) = \sum_{i=1}^{L} \rho_i \ \mathbf{a}(\theta_{mp} + \delta\theta_{mpi}, \ \Delta_{mp} + \delta\Delta_{mpi}) \ s_m(t - \tau_{mp} - \delta\tau_{mpi}) \ e^{j2\pi \ (fmp + \delta fmpi) \ t}$$

en considérant que la source élémentaire est le diffuseur d'incidence ($\theta_{mp} + \delta\theta_{mpi}$, $\Delta_{mp} + \delta\Delta_{mpi}$) associé au $i^{\text{ième}}$ diffuseur du $p^{\text{ième}}$ multi-trajet du $m^{\text{ième}}$ émetteur,

b) décomposer le cône de diffusion en L diffuseurs élémentaires_et combiner les vecteurs directeurs $\mathbf{a}(\theta_{mp} + \delta\theta_{mpi}, \Delta_{mp} + \delta\Delta_{mpi})$ associés aux L diffuseurs pour obtenir un vecteur ( $\mathbf{D}(\theta, \Delta, \delta\theta \ \delta\Delta) \ \alpha$ ou $\mathbf{U}(\theta, \Delta) \ \beta(\delta\theta, \delta\Delta, \alpha)$) avec $\mathbf{D}(\theta, \Delta, \delta\theta, \delta\Delta)$=[$\mathbf{a}(\theta_{mp} + \delta\theta_{mp1}, \Delta_{mp} + \delta\Delta_{mp1})$ ... $\mathbf{a}(\theta_{mp} + \delta\theta_{mpL}, \Delta_{mp} + \delta\Delta_{mpL})$] et

$$\mathsf{U}(\theta, \ \Delta \ ) = [ \ \mathbf{a}(\theta, \Delta) \ \ \frac{\partial \mathbf{a}(\theta, \Delta)}{\partial \theta} \ \ \frac{\partial \mathbf{a}(\theta, \Delta)}{\partial \Delta} \ ... ]$$ dépendant au moins d'un des paramètres d'incidences

et de déviation ($\theta$, $\Delta$, $\delta\theta$, $\delta\Delta$) et du vecteur de combinaison $\alpha$,

appliquer un critère de type MUSIC ou tout autre algorithme de goniométrie aux vecteurs $\mathbf{c}(\theta, \Delta, \delta\theta, \delta\Delta, \alpha)$ =$\mathbf{D}(\theta, \Delta, \delta\theta, \delta\Delta) \ \alpha$ ou $\mathbf{c}(\theta, \Delta, \delta\theta, \delta\Delta, \alpha)$ =$\mathbf{U}(\theta, \Delta) \ \beta(\delta\theta, \delta\Delta, \alpha)$ obtenu à l'étape b) afin de déterminer au moins un des paramètres d'incidences $\theta_{mp}$, $\Delta_{mp}$, $\delta\theta_{mp}$, $\delta\Delta_{mp}$ du cône de diffusion associé.

L'étape de minimisation est, par exemple, effectuée sur le vecteur $\mathbf{D_s}(\theta, \Delta, \delta\theta, \delta\Delta)\alpha$ ou $\mathbf{U_s}(\theta, \Delta)\beta(\delta\theta, \delta\Delta, \alpha)$ où les matrices $\mathbf{D_s}(\theta, \Delta, \delta\theta, \delta\Delta)$ et $\mathbf{U_s}(\theta, \Delta)$ dépendent respectivement de $\mathbf{D}(\theta, \Delta, \delta\theta, \delta\Delta)$ et $\mathbf{U}(\theta, \Delta)$ et où les paramètres $\delta\theta$ et/ou $\delta\Delta$ sont remplacés par leurs opposés dans $\mathbf{c}(\theta, \Delta, \delta\theta, \delta\Delta, \alpha)$ de façon a respecter les symétries du cône de diffusion.

La matrice $\mathbf{D}(\theta, \delta\theta)$ peut dépendre uniquement de l'angle d'azimut $\theta$ et du vecteur de déviation $\delta\theta$ de cet angle.

L'étape de minimisation est, par exemple, effectuée sur la matrice $\mathbf{D_s}(\theta, \delta\theta)$ où le paramètre $\delta\theta$ est remplacé par son opposé dans $\mathbf{c}(\theta, \delta\theta, \alpha)$.

Le procédé comporte, par exemple, une étape de développement limité des vecteurs de la matrice $\mathbf{D}(\theta, \delta\theta)$, l'étape de minimisation étant effectuée sur une matrice $\mathbf{U}(\theta)$ afin de déterminer les paramètres d'angle d'incidence $\theta_{mp}$ et à partir de ces paramètres les paramètres de décalage d'angle $\delta\theta_{mp}$.

L'étape de minimisation peut être effectuée sur le vecteur $\mathbf{U_s}(\theta)\beta(\delta\theta, \alpha)$ où la matrice $\mathbf{U_s}(\theta)$ est obtenue à partie de la matrice $\mathbf{U}(\theta)$ où le paramètre $\delta\theta$ est remplacé par son opposé dans $\mathbf{c}(\theta, \delta\theta, \alpha)$= $\mathbf{U}(\theta)\beta(\delta\theta, \alpha)$.

L'objet de l'invention présente notamment les avantages suivants :

- réaliser une goniométrie en azimut et/ou en azimut-site,
- réduire le coût de calcul de la méthode en utilisant un développement limité des vecteurs directeurs,
- prendre en compte tout type de diffuseurs, notamment les diffuseurs partiellement corrélés.

D'autres caractéristiques et avantages de l'invention apparaîtront mieux à la lecture de la description qui suit d'un exemple de réalisation non limitatif annexé des figures qui représentent :

- La figure 1 une représentation de la diffusion d'une onde d'un téléphone mobile au travers une couche de neige,
- La figure 2 un exemple d'architecture d'un système de traitement d'antennes,
- La figure 3 un exemple de goniométrie en azimut-site 2D,
- La figure 4 un schéma des étapes de la première variante de la goniométrie de sources diffuses en azimut-site,
- La figure 5 un schéma d'une variante de la figure 4 tenant compte de la symétrie angulaire des cônes de diffusion,
- La figure 6 une deuxième variante du procédé de goniométrie des sources diffuses en azimut-site,
- La figure 7 la version symétrique de la variante de la figure 6,
- La figure 8 les étapes de la première variante de la goniométrie en azimut des sources diffuses,
- Les figures 9 et 10 des résultats de goniométrie en azimut d'une

ou de plusieurs sources diffuses associés à la première variante de l'algorithme,

- La figure 11 la variante symétrique de la figure 8,
- La figure 12 les étapes associées à une deuxième variante du procédé de goniométrie en azimut,
- Les figures 13 et 14 deux résultats de goniométrie en azimut de sources diffuses,
- La figure 15 un schéma de la version symétrique de la deuxième variante de goniométrie en azimut.

De manière à mieux faire comprendre le procédé selon l'invention, la description qui suit est donnée, à titre illustratif et nullement limitatif, dans le cadre de la diffusion de l'onde d'un téléphone mobile au travers d'une couche de neige vers les récepteurs d'un avion, par exemple représentée à la figure 1. Les grains de neige jouent le rôle de diffuseurs.

Dans cet exemple, une source diffuse est caractérisée, par exemple, par une direction et un cône de diffusion.

Avant de détailler l'exemple de réalisation, quelques rappels pouvant être utiles à la compréhension du procédé selon l'invention sont donnés.

## CAS GENERAL

En présence de $M$ émetteurs se propageant suivant $P_m$ multi-trajets non diffus d'incidences ($\theta_{mp}$, $\Delta_{mp}$) arrivant sur un réseau composé de $N$ capteurs, on reçoit en sortie de ces capteurs le vecteur observation $\mathbf{x}(t)$ suivant :

$$\mathbf{x}(t)=\begin{bmatrix} x_1(t) \\ \vdots \\ x_N(t) \end{bmatrix} = \sum_{m=1}^{M} \sum_{p=1}^{P_m} \rho_{mp}\, \mathbf{a}(\theta_{mp},\Delta_{mp})\, \mathbf{s}_m(t-\tau_{mp})\, e^{j2\pi f_{mp} t} + \mathbf{b}(t) \qquad (1)$$

où $x_n(t)$ est le signal reçu sur le $n^{\text{ième}}$ capteur, $\mathbf{a}(\theta,\Delta)$ est la réponse du réseau de capteurs a une source d'incidence $\theta$, $\Delta$, $s_m(t)$ est le signal émis par le $m^{\text{ième}}$ émetteur, $\tau_{mp}$, $f_{mp}$ et $\rho_{mp}$ sont respectivement le retard, le décalage doppler et l'atténuation du $p^{\text{ième}}$ multi-trajet du $m^{\text{ième}}$ émetteur et x($t$) est le bruit additif.

Pour déterminer les $M_T = P_1+...+ P_M$ incidences ($\theta_{mp}$, $\Delta_{mp}$), la méthode MUSIC [1] recherche les $M_T$ minimums ($\hat{\theta}_{mp}, \hat{\Delta}_{mp}$) qui annulent le pseudo-spectre suivant :

$$J_{\text{MUSIC}}(\theta,\Delta) \;=\; \frac{\mathbf{a}^H(\theta,\Delta)\,\Pi_b\,\mathbf{a}(\theta,\Delta)}{\mathbf{a}^H(\theta,\Delta)\,\mathbf{a}(\theta,\Delta)} \;, \qquad (2)$$

où la matrice $\Pi_b$ dépend des ($N-M_T$) vecteurs propres $\mathbf{e}_{MT+i}$ ($1\le i \le N-M_T$) associés aux plus faibles valeurs propres de la matrice de covariance $\mathbf{R}_{xx}$=E[$\mathbf{x}(t)\,\mathbf{x}(t)^H$] : $\Pi_{\mathbf{b}}$ = $E_b\,E_b^H$ où $E_b$=[$\mathbf{e}_{MT+1}...\mathbf{e}_N$]. On note aussi que $\mathbf{u}^H$ est le transposé conjugué du vecteur u. La méthode MUSIC est basée sur le fait que les $M_T$ vecteurs propres $\mathbf{e}_i$ ($1\le i \le M_T$) associés aux plus fortes valeurs propres engendrent l'espace défini par les $M_T$ vecteurs directeurs $\mathbf{a}(\theta_{mp},\Delta_{mp})$ des sources tel que :

$$\mathbf{e}_i \;=\; \sum_{m=1}^{M} \sum_{p=1}^{P_m} \alpha_{mpi}\, \mathbf{a}(\theta_{mp},\Delta_{mp}), \qquad (3)$$

et que les vecteurs $\mathbf{e}_i$ sont orthogonaux aux vecteurs de l'espace bruit $\mathbf{e}_{i+MT.}$

En présence de $M$ émetteurs se propageant suivant $P_m$ multi-trajets diffus on obtient le vecteur observation $\mathbf{x}(t)$ suivant :

$$\mathbf{x}(t)= \sum_{m=1}^{M} \sum_{p=1}^{P_m} \mathbf{x}_{mp}(t) + \mathbf{b}(t) \qquad (4)$$

tel que $\quad \mathbf{x}_{mp}(t) = \displaystyle\int_{\theta_{mp}-\delta\theta_{mp}}^{\theta_{mp}+\delta\theta_{mp}} \int_{\Delta_{mp}-\delta\Delta_{mp}}^{\Delta_{mp}+\delta\Delta_{mp}} \rho(\theta,\Delta)\ \mathbf{a}(\theta,\Delta)\ s_m(t-\tau(\theta,\Delta))\ e^{j2\pi f(\theta,\Delta)\,t}\ d\theta\ d\Delta$

où $(\theta_{mp}, \Delta_{mp})$ et $(\delta\theta_{mp}, \delta\Delta_{mp})$ désignent respectivement le centre et la largeur du cône de diffusion associés au $p^{\text{ième}}$ multi-trajet du $m^{\text{ième}}$ émetteur. Les paramètres $\tau(\theta, \Delta)$, $f(\theta, \Delta)$ et $\rho(\theta, \Delta)$ sont respectivement le retard, le décalage doppler et l'atténuation du diffuseur d'incidence $(\theta, \Delta)$. En présence de diffuseurs cohérents, le retard $\tau(\theta, \Delta)$ et le décalage doppler $f(\theta, \Delta)$ sont nuls.

**Principe du procédé selon l'invention**

L'invention est basée notamment sur une décomposition d'un cône de diffusion en un nombre fini de diffuseurs. En notant par $L$ le nombre de diffuseurs d'une source, l'expression (4) peut se réécrire sous l'expression (5) suivante :

$$\mathbf{x}_{mp}(t) = \sum_{i=1}^{L} \rho_i\ \mathbf{a}(\theta_{mp}+\delta\theta_{mpi},\ \Delta_{mp}+\delta\Delta_{mpi})\ s_m(t-\tau_{mp}-\delta\tau_{mpi})\ e^{j2\pi\,(f_{mp}+\delta f_{mpi})\,t}$$

L'expression (5) permet de se ramener au modèle de sources discrètes (diffuseurs) de l'expression (1) en considérant que, la source élémentaire est le diffuseur d'incidence $(\theta_{mp}+\delta\theta_{mpi}, \Delta_{mp}+\delta\Delta_{mpi})$ associé au $i^{\text{ième}}$ diffuseur du $p^{\text{ième}}$ multi-trajet du $m^{\text{ième}}$ émetteur. Dans ces conditions, l'espace signal de la matrice de covariance $\mathbf{R_{xx}}=E[\mathbf{x}(t)\,\mathbf{x}(t)^H]$ est engendré par les vecteurs $\mathbf{a}(\theta_{mp}+\delta\theta_{mip}, \Delta_{mp}+\delta\Delta_{mpi})$. En notant par $K$ le rang de la matrice de covariance $\mathbf{R_{xx}}$, on en déduit que ses vecteurs propres $\mathbf{e}_i$ ($1\le i \le K$) associés aux plus fortes valeurs propres vérifient d'après (3) l'expression suivante :

$$\mathbf{e}_i = \sum_{m=1}^{M} \sum_{p=1}^{P_n} \mathbf{c}(\theta_{mp}, \Delta_{mp}, \delta\theta_{mp}, \delta\Delta_{mp}, \alpha_{mp}{}^i) \quad \text{pour} \quad 1\le i \le K \quad (6)$$

tel que $\quad \mathbf{c}(\theta, \Delta, \delta\theta, \delta\Delta, \alpha) = \displaystyle\sum_{j=1}^{L} \alpha_j\ \mathbf{a}(\theta+\delta\theta_j, \Delta+\delta\Delta_j)$

avec $\quad \delta\theta = \begin{bmatrix} \delta\theta_1 \\ \vdots \\ \delta\theta_L \end{bmatrix}, \quad \delta\Delta = \begin{bmatrix} \delta\Delta_1 \\ \vdots \\ \delta\Delta_L \end{bmatrix} \quad \text{et} \quad \alpha = \begin{bmatrix} \alpha_1 \\ \vdots \\ \alpha_L \end{bmatrix}$

En présence de diffuseurs cohérents où $\delta\tau_{mpi}=0$ et $\delta f_{mpi}=0$, il faut remarquer que le rang de la matrice de covariance vérifie : $K= M_T =P_1+...+P_M$. Dans le cas général de diffuseurs partiellement corrélés où $\delta\tau_{mpi}\neq0$ et $\delta f_{mpi}\neq0$, ce rang vérifie $K \ge M_T =P_1+...+P_M$. Dans la présente invention on considère que $\mathbf{c}(\theta_{mp}, \Delta_{mp}, \delta\theta_{mp}, \delta\Delta_{mp}, \alpha_{mp}{}^i)$ est un des vecteurs directeurs associé au $p^{\text{ième}}$ multi-trajet du $m^{\text{ième}}$ émetteur et que les paramètres inconnus sont incidence moyenne $(\theta_{mp}, \Delta_{mp})$, les écarts en angle des diffuseurs $(\delta\theta_{mp}, \delta\Delta_{mp})$ et un des vecteurs $\alpha_{mp}{}^i$.

**CAS DE LA GONIOMETRIE EN AZIMUT ET EN SITE**

**1$^{\text{ière}}$ variante**

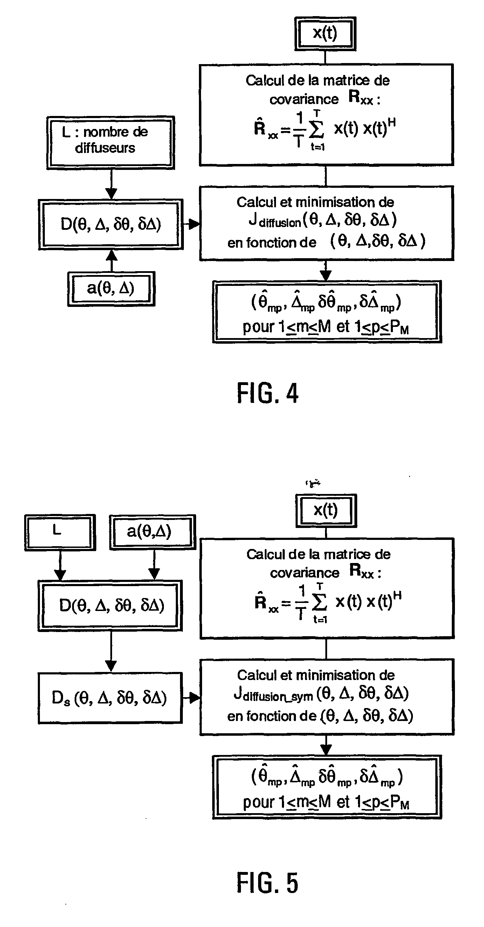

La figure 4 schématise les étapes mises en oeuvre selon une première variante de réalisation du procédé.
En présumé, on décompose le cône de diffusion en L diffuseurs élémentaires (équation (5)), on combine les différents vecteurs directeurs $\mathbf{a}(\theta_{mp}+\delta\theta_{mpi}, \Delta_{mp}+\delta\Delta_{mpi})$ ce qui conduit à obtenir un vecteur $D(\theta, \Delta, \delta\theta, \delta\Delta)\,\alpha$ sur lequel on applique un critère de type MUSIC ou de goniométrie afin d'obtenir les 4 paramètres $\theta_{mp}, \Delta_{mp}, \delta\theta_{mp}, \delta\Delta_{mp}$ qui minimisent ce critère (le critère MUSIC est appliqué sur un vecteur résultant de la combinaison linéaire des différents vecteurs directeurs).

Pour déterminer ces paramètres avec un algorithme de type MUSIC [1] i1 faut, d'après les équations (2) et (6), chercher les minimums $(\hat{\theta}_{mp},\hat{\Delta}_{mp},\delta\hat{\theta}_{mp},\delta\hat{\Delta}_{mp},\alpha_{mp}{}^{i})$ qui annulent le pseudo-spectre suivant :

$$J_{\text{MUSIC\_diff}}(\theta, \Delta, \delta\theta, \delta\Delta, \alpha) = \frac{\mathbf{c}^{H}(\theta,\Delta,\delta\theta,\delta\Delta,\alpha)\ \Pi_{\mathbf{b}}\ \mathbf{c}(\theta,\Delta,\delta\theta,\delta\Delta,\alpha)}{\mathbf{c}^{H}(\theta,\Delta,\delta\theta,\delta\Delta,\alpha)\ \mathbf{c}(\theta,\Delta,\delta\theta,\delta\Delta,\alpha)}, \qquad (7)$$

Où la matrice $\Pi_{\mathbf{b}}$ dépend des $(N\text{-}K)$ vecteurs propres $\mathbf{e}_{MT+i}$ $(1\le i \le N\text{-}K)$ associés aux plus faibles valeurs propres de la matrice de covariance $\mathbf{R_{xx}}=E[\mathbf{x}(t)\ \mathbf{x}(t)^{H}]$ : $\Pi_{\mathbf{b}} = E_{b}\ E_{b}{}^{H}$ où $E_{b}=[\mathbf{e}_{K\ne1...}\mathbf{e}_{N}]$. En remarquant d'après l'expression (6) que le vecteur $\mathbf{c}(\theta, \Delta, \delta\theta, \Delta, \alpha)$ peut s'écrire sous la forme suivante :

$$\mathbf{c}(\theta, \Delta, \delta\theta, \delta\Delta, \alpha) = \mathbf{D}(\theta, \Delta, \delta\theta, \delta\Delta)\,\alpha, \qquad (8)$$

avec $\mathbf{D}(\theta, \Delta, \delta\theta, \delta\Delta)=[\ \mathbf{a}(\theta+\delta\theta_{1}, \Delta+\delta\Delta_{1})\ ...\ \mathbf{a}(\theta+\delta\theta_{L}, \Delta+\delta\Delta_{L})\ ]$, on peut en déduire que le critère $J_{\text{MUSIC\_diff}}(\theta, \Delta, \delta\theta, \delta\Delta, \alpha)$ devient :

$$J_{\text{MUSIC\_diff}}(\theta, \Delta, \delta\theta, \delta\Delta, \alpha) = \frac{\alpha^{H}\ Q_{1}(\theta,\Delta,\delta\theta,\delta\Delta)\,\alpha}{\alpha^{H}\ Q_{2}(\theta,\Delta,\delta\theta,\delta\Delta)\,\alpha}, \qquad (9)$$

avec $Q_{1}(\theta, \Delta, \delta\theta, \delta\Delta) = \mathbf{D}(\theta, \Delta, \delta\theta, \delta\Delta)^{H}\ \Pi_{\mathbf{b}}\ \mathbf{D}(\theta, \Delta, \delta\theta, \delta\Delta)$,
et $Q_{2}(\theta, \Delta, \delta\theta, \delta\Delta) = \mathbf{D}(\theta, \Delta, \delta\theta, \delta\Delta)^{H}\ \mathbf{D}(\theta, \Delta, \delta\theta, \delta\Delta)$,

La technique va tout d'abord consister à minimiser le critère $J_{\text{MUSIC\_diff}}(\theta, \Delta, \delta\theta, \delta\Delta, \alpha)$ avec $\alpha$. D'après la technique décrite dans la référence [2], par exemple, on obtient le critère $J_{\text{min\_diff}}(\theta, \Delta, \delta\theta, \delta\Delta)$ suivant :

$$J_{\text{min\_diff}}(\theta, \Delta, \delta\theta, \delta\Delta) = \lambda_{\text{min}}\{\ Q_{1}(\theta, \Delta, \delta\theta, \delta\Delta)\ Q_{2}(\theta, \Delta, \delta\theta, \delta\Delta)^{-1}\} \qquad (10)$$

où $\lambda_{\text{min}}(\mathbf{Q})$ désigne la valeur propre minimale de la matrice $\mathbf{Q}$. En remarquant que le critère $J_{\text{min\_diff}}(\theta, \Delta, \delta\theta, \delta\Delta)$ doit s'annuler pour les quadruplets de paramètres $(\theta_{mp},\Delta_{mp},\delta\theta_{mp},\delta\Delta_{mp})$ et que $\det(AB^{-1})=\det(A)/\det(B)$, on en déduit que les quadruplets de paramètres $(\theta_{mp},\Delta_{mp},\delta\theta_{mp},\delta\Delta_{mp})$ annulent aussi le critère suivant :

$$J_{\text{diffusion}}(\theta, \Delta, \delta\theta, \delta\Delta) = \det(Q_{1}(\theta, \Delta, \delta\theta, \delta\Delta))/\det(Q_{2}(\theta, \Delta, \delta\theta, \delta\Delta)), \qquad (11)$$

où $\det(\mathbf{Q})$ désigne le déterminant de la matrice $\mathbf{Q}$. On cherche donc les $M_{T}$ quadruplets de paramètres $(\theta_{mp},\Delta_{mp},\delta\theta_{mp},\delta\Delta_{mp})$ qui minimisent le critère $J_{\text{diffusion}}(\theta, \Delta, \delta\theta, \delta\Delta)$.

La figure 5 représente les étapes d'une variante de réalisation prenant en compte la symétrie de la solution en incidence.

En effet, si $(\theta,\Delta,\delta\theta,\delta\Delta)$ est solution, il en est de même pour $(\theta,\Delta,-\delta\theta,\delta\Delta)$, $(\theta,\Delta,\delta\theta,-\delta\Delta)$ et $(\theta,\Delta,-\delta\theta,-\delta\Delta)$. De cette remarque on en déduit que :

$$\mathbf{c}(\theta, \varDelta, \delta\theta, \delta\varDelta, \alpha)^{\mathrm{H}} \mathbf{E_b} = \mathbf{0,}$$

$$\mathbf{c}(\theta, \varDelta, -\delta\theta, \delta\varDelta, \alpha)^{\mathrm{H}} \mathbf{E_b} = \mathbf{0,}$$

$$\mathbf{c}(\theta, \varDelta, \delta\theta, -\delta\varDelta, \alpha)^{\mathrm{H}} \mathbf{E_b} = \mathbf{0,}$$

$$\mathbf{c}(\theta, \varDelta, -\delta\theta, -\delta\varDelta, \alpha)^{\mathrm{H}} \mathbf{E_b} = \mathbf{0,} \qquad (11\text{-}1)$$

Où la matrice $\mathbf{E_b}$ dépend des ($N$-$K$) vecteurs propres $\mathbf{e}_{MT+i}$ ($1 \leq i \leq N$- $K$) associés aux plus faibles valeurs propres de la matrice de covariance $R_{xx} = E[\mathbf{x}(t)\,\mathbf{x}(t)^{\mathrm{H}}]$ tel que : $\mathbf{E_b} = [\mathbf{e}_{K+1\ldots}\mathbf{e}_N]$. A partir de l'expression (11-1) on en déduit que pour estimer les paramètres ($\theta_{mp}, \varDelta_{mp}, \delta\theta_{mp}, \delta\varDelta_{mp}$), il faut chercher les minimums qui annulent le pseudo-spectre suivant :

$$J_{\mathrm{MUSIC\_diff\_sym}}(\theta, \varDelta, \delta\theta, \delta\varDelta, \alpha) = \frac{\mathbf{c}_s^{\mathrm{H}}(\theta, \varDelta, \delta\theta, \delta\varDelta, \alpha)\ \mathbf{\Pi}_{bs}\ \mathbf{c}_s(\theta, \varDelta, \delta\theta, \delta\varDelta, \alpha)}{\mathbf{c}_s^{\mathrm{H}}(\theta, \varDelta, \delta\theta, \delta\varDelta, \alpha)\ \mathbf{c}_s(\theta, \varDelta, \delta\theta, \delta\varDelta, \alpha)},$$

$$\mathbf{c}_s(\theta, \varDelta, \delta\theta, \delta\varDelta, \alpha) = \begin{bmatrix} \mathbf{c}(\theta, \varDelta, \delta\theta, \delta\varDelta, \alpha) \\ \mathbf{c}(\theta, \varDelta, -\delta\theta, \delta\varDelta, \alpha) \\ \mathbf{c}(\theta, \varDelta, \delta\theta, -\delta\varDelta, \alpha) \\ \mathbf{c}(\theta, \varDelta, -\delta\theta, -\delta\varDelta, \alpha) \end{bmatrix} \text{et}\quad \mathbf{\Pi}_{bs} = \frac{1}{4} \mathbf{E}_{bs}\,\mathbf{E}_{bs}^{\mathrm{H}}$$

$$\text{où } \mathbf{E}_{bs} = \begin{bmatrix} \mathbf{E_b} \\ \mathbf{E_b} \\ \mathbf{E_b} \\ \mathbf{E_b} \end{bmatrix} \qquad (11\text{-}2)$$

D'après l'expression (8), le vecteur $\mathbf{c_s}(\theta, \varDelta, \delta\theta, \delta\varDelta, \alpha)$ peut s'écrire de la façon suivante :

$$\mathbf{c_s}(\theta, \varDelta, \delta\theta, \delta\varDelta, \alpha) = \mathbf{D_s}(\theta, \varDelta, \delta\theta, \delta\varDelta)\,\alpha, \qquad (11\text{-}3)$$

$$\text{avec } \mathbf{D_s}(\theta, \varDelta, \delta\theta, \delta\varDelta) = \begin{bmatrix} \mathbf{D}(\theta, \varDelta, \delta\theta, \delta\varDelta) \\ \mathbf{D}(\theta, \varDelta, -\delta\theta, \delta\varDelta) \\ \mathbf{D}(\theta, \varDelta, \delta\theta, -\delta\varDelta) \\ \mathbf{D}(\theta, \varDelta, -\delta\theta, -\delta\varDelta) \end{bmatrix},$$

La minimisation de $J_{\mathrm{MUSIC\_diff\_sym}}(\theta, \varDelta, \delta\theta, \delta\varDelta, \alpha)$ par rapport à $\alpha$ va conduire au critère $J_{\mathrm{diffusion\_sym}}(\theta, \varDelta, \delta\theta, \delta\varDelta)$. Pour obtenir $J_{\mathrm{diffusion\_sym}}(\theta, \varDelta, \delta\theta, \delta\varDelta)$, il suffit de remplacer dans les expressions (9)(11), $\mathbf{D}(\theta, \varDelta, \delta\theta, \delta\varDelta)$ par son correspondant symétrique $\mathbf{D_s}(\theta, \varDelta, \delta\theta, \delta\varDelta)$ et $\Pi_b$ par $\Pi_{bs}$. On obtient ainsi :

$$J_{\mathrm{diffusion\text{-}sym}}(\theta, \varDelta, \delta\theta, \delta\varDelta) = \det(\mathbf{Q}_{1s}(\theta, \varDelta, \delta\theta, \delta\varDelta))/\det(\mathbf{Q}_{2s}(\theta, \varDelta, \delta\theta, \delta\varDelta)),$$

$$(11\text{-}4)$$

avec $\mathbf{Q}_{1s}(\theta, \Delta, \delta\theta, \delta\Delta) = \mathbf{D}_s(\theta, \Delta, \delta\theta, \delta\Delta)^H \Pi_{bs} \mathbf{D}_s(\theta, \Delta, \delta\theta, \delta\Delta)$,

et $\mathbf{Q}_{2s}(\theta, \Delta, \delta\theta, \delta\Delta) = \mathbf{D}_s(\theta, \Delta, \delta\theta, \delta\Delta)^H \mathbf{D}_s(\theta, \Delta, \delta\theta, \delta\Delta)$,

On cherche donc les $M_T$ quadruplets de paramètres $(\theta_{mp}, \Delta_{mp}, \delta\theta_{mp}, \delta\Delta_{mp})$ qui minimisent le critère $J_{\text{diffusion-sym}}(\theta, \Delta, \delta\theta, \delta\Delta)$.

### 2$^{\text{ième}}$ variante

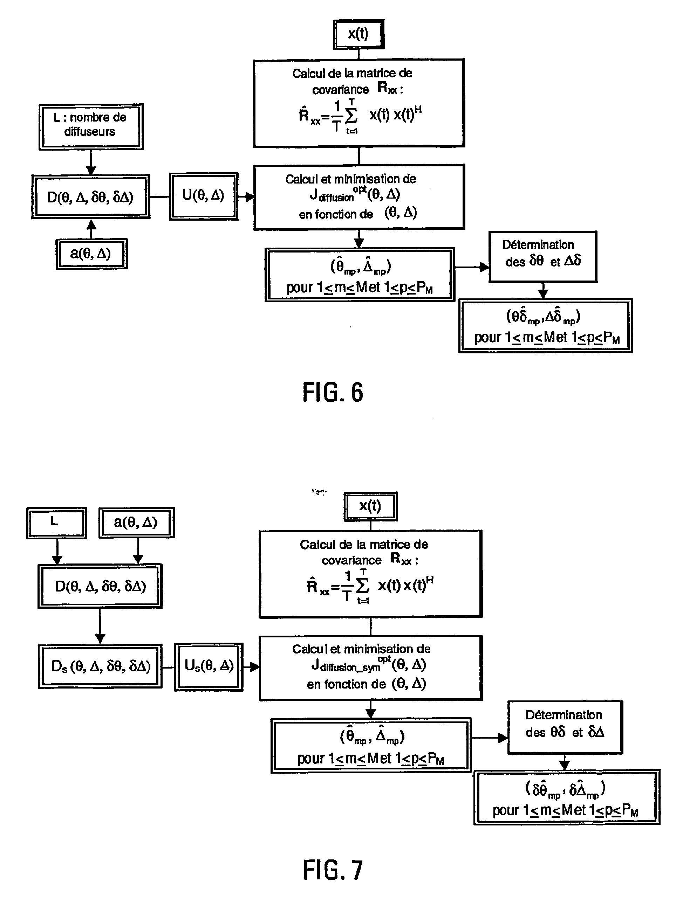

La figure 6 représente une deuxième variante de la goniométrie des sources diffuses en azimut-site offrant notamment comme avantage de réduire les coûts de calcul.

La première variante de la goniométrie des sources fait intervenir le calcul d'un pseudo-spectre $J_{\text{diffusion}}$ dépendant de 4 paramètres $(\theta, \Delta, \delta\theta, \delta\Delta)$ dont 2 sont des vecteurs de longueur $L$. La deuxième variante a pour objectif de réduire ce nombre de paramètres en effectuant le développement limité suivant des vecteurs directeurs autour d'une incidence centrale $(\theta, \Delta)$ correspondant au centre du cône de diffusion :

$$\mathbf{a}(\theta + \delta\theta_i, \Delta + \delta\Delta_i) = \mathbf{a}(\theta, \Delta) + \delta\theta_i \frac{\partial \mathbf{a}(\theta, \Delta)}{\partial \theta} + \delta\Delta_i \frac{\partial \mathbf{a}(\theta, \Delta)}{\partial \Delta} + \dots \text{ etc} \qquad (12)$$

où $\partial(\mathbf{a}(\theta, \Delta))^n / \partial\theta^{n-p}\partial\Delta^p$ désigne une dérivée $n^{\text{ième}}$ du vecteur directeur $\mathbf{a}(\theta, \Delta)$. Ceci correspond à un développement limité autour de l'incidence centrale (changement de base de la combinaison linéaire) suivant les dérivées des vecteurs directeurs dépendant de l'incidence centrale du cône. A partir de cette dernière expression, on peut séparer les incidences $(\theta, \Delta)$ et les déviations $(\delta\theta, \delta\Delta)$ de la manière suivante :

$$\mathbf{a}(\theta + \delta\theta_i, \Delta + \delta\Delta_i) = \mathbf{U}(\theta, \Delta) \mathbf{k}(\delta\theta_i, \delta\Delta_i) \qquad (13)$$

où $\mathbf{U}(\theta, \Delta) = \left[\ \mathbf{a}(\theta, \Delta)\ \frac{\partial \mathbf{a}(\theta, \Delta)}{\partial \theta}\ \frac{\partial \mathbf{a}(\theta, \Delta)}{\partial \Delta}\ \dots\right]$ et $\mathbf{k}(\delta\theta_i, \delta\Delta_i) = \begin{bmatrix} 1 \\ \delta\theta_i \\ \delta\Delta_i \\ \vdots \end{bmatrix}$

D'après les expressions (6)(8) et (13), le vecteur $\mathbf{c}(\theta, \Delta, \delta\theta, \delta\Delta, \alpha)$ devient :

$$\mathbf{c}(\theta, \Delta, \delta\theta, \delta\Delta, \alpha) = \mathbf{U}(\theta, \Delta)\ \beta(\delta\theta, \delta\Delta, \alpha), \qquad (14)$$

avec $\beta(\delta\theta, \delta\Delta, \alpha) = \sum_{j=1}^{L} \alpha_j\ \mathbf{k}(\delta\theta_i, \delta\Delta_j)$

En remplaçant dans l'équation (9) $\mathbf{D}(\theta, \Delta, \delta\theta, \delta\Delta)$ par $\mathbf{U}(\theta, \Delta)$ et $\alpha$ par $\beta(\delta\theta, \delta\Delta, \alpha)$, on en déduit d'après (9)(10)(1) que pour estimer les $M_T$ incidences $(\theta_{mp}, \Delta_{mp})$, il suffit de minimiser le critère bi-dimensionnel suivant :

$$J_{\text{diffusion\_sym}}^{\text{opt}}(\theta, \Delta) = \det(\mathbf{Q}_1^{\text{opt}}(\theta, \Delta)) / \det(\mathbf{Q}_2^{\text{opt}}(\theta, \Delta)), \qquad (15)$$

avec

$\mathbf{Q}_1^{\text{opt}}(\theta, \Delta) = \mathbf{U}(\theta, \Delta)^H \Pi_b \mathbf{U}(\theta, \Delta)$ et $\mathbf{Q}_2^{\text{opt}}(\theta, \Delta) = \mathbf{U}(\theta, \Delta)^H \mathbf{U}(\theta, \Delta)$,

Pour déterminer les vecteurs $\delta\theta_{mp}$ et $\delta\Delta_{mp}$ il faut estimer le vecteur $\beta(\delta\theta_{mp}, \delta\Delta_{mp}, \alpha)$. Pour cela il suffit de chercher le vecteur propre associé à la valeur propre minimale de $\mathbf{Q}_2^{\text{opt}}(\theta_{mp}, \Delta_{mp})^{-1}\mathbf{Q}_1^{\text{opt}}(\theta_{mp}, \Delta_{mp})$.

La figure 7 représente une variante du procédé de la figure 6 qui tient compte de la symétrie des solutions afin de lever un certain nombre d'ambiguïtés. Pour cela il faut tout d'abord remarquer que d'après (13)(14) :

$$\mathbf{c}(\theta, \varDelta, -\delta\theta, \delta\Delta, \alpha) = \mathbf{U}_1(\theta, \varDelta)\ \beta(\delta\theta, \delta\Delta, \alpha)$$

avec $\mathbf{U}_1(\theta, \varDelta) = [\ \mathbf{a}(\theta, \varDelta) - \dfrac{\partial \mathbf{a}(\theta, \varDelta)}{\partial \theta}\ \dfrac{\partial \mathbf{a}(\theta, \varDelta)}{\partial \varDelta}\ \ldots],$

$\mathbf{c}(\theta, \Delta, \delta\theta, -\delta\Delta, \alpha) = \mathbf{U}_2(\theta, \Delta)\ \beta(\delta\theta, \delta\Delta, \alpha)$

avec $\mathbf{U}_2(\theta, \varDelta) = [\ \mathbf{a}(\theta, \varDelta)\ \dfrac{\partial \mathbf{a}(\theta, \varDelta)}{\partial \theta}\ \ -\dfrac{\partial \mathbf{a}(\theta, \varDelta)}{\partial \varDelta}\ \ldots],$

$\mathbf{c}(\theta, \Delta, -\delta\theta, -\delta\Delta, \alpha) = \mathbf{U}_3(\theta, \Delta)\ \beta(\delta\theta, \delta\Delta, \alpha)$

avec

$$\mathbf{U}_3(\theta, \varDelta) = [\ \mathbf{a}(\theta, \varDelta) - \dfrac{\partial \mathbf{a}(\theta, \varDelta)}{\partial \theta}\ \ -\dfrac{\partial \mathbf{a}(\theta, \varDelta)}{\partial \varDelta}\ ..] \tag{15-1}$$

On en déduit d'après (11-2) une nouvelle expression du vecteur $\mathbf{c_s}(\theta, \Delta, \delta\theta, \delta\Delta, \alpha)$ :

$$\mathbf{c_s}(\theta, \varDelta, \delta\theta, \delta\Delta, \alpha) = \mathbf{U_s}(\theta, \varDelta)\ \beta(\delta\theta, \delta\Delta, \alpha)\ \text{et}\ \mathbf{U_s}(\theta, \varDelta) = \begin{bmatrix} \mathbf{U}(\theta, \Delta, \alpha) \\ \mathbf{U}_1(\theta, \Delta, \alpha) \\ \mathbf{U}_2(\theta, \Delta, \alpha) \\ \mathbf{U}_3(\theta, \Delta, \alpha) \end{bmatrix}$$

(15-2)

En remplaçant dans l'équation (15) $\mathbf{U}_s(\theta, \Delta)$ par $\mathbf{U}(\theta, \Delta)$, on en déduit d'après (11-2)(11-4) que pour estimer les $M_T$ incidences $(\theta_{mp}, \Delta_{mp})$ il suffit de minimiser le critère bi-dimensionnel suivant :

$$\mathrm{J}_{\text{diffusion\_sym}}^{\text{opt}}(\theta, \varDelta)\ = \det(\mathbf{Q}_{1s}^{\text{opt}}(\theta, \varDelta)) / \det(\mathbf{Q}_{2s}^{\text{opt}}(\theta, \varDelta)), \tag{15-3}$$

avec $\mathbf{Q}_{1s}^{\text{opt}}(\theta, \Delta) = \mathbf{U_s}(\theta, \Delta)^{\mathrm{H}}\ \Pi_{\mathbf{bs}}\ \mathbf{U_s}(\theta, \Delta)$ et
$\mathbf{Q}_{2s}^{\text{opt}}(\theta, \Delta) = \mathbf{U_s}(\theta, \Delta)^{\mathrm{H}}\ \mathbf{U_s}(\theta, \Delta)$

## CAS DE LA GONIOMETRIE 1D EN AZIMUT

L'incidence d'une source dépend d'un seul paramètre qui est l'azimut $\theta$. Dans ces conditions, le vecteur directeur $\mathbf{a}(\theta)$ est une fonction de $\theta$. En présence de $M$ émetteurs se propageant suivant $P_m$ multi-trajets diffus, le vecteur observation $\mathbf{x}(t)$ de l'équation (4) devient :

$$\mathbf{x}(t) = \sum_{m=1}^{M}\ \sum_{p=1}^{P_m}\ \mathbf{x}_{mp}(t) + \mathbf{b}(t)$$

tel que

$$\mathbf{x}_{mp}(t) = \int_{\theta_{mp}-\delta\theta_{mp}}^{\theta_{mp}+\delta\theta_{mp}} \rho(\theta)\ \mathbf{a}(\theta)\ s_m(t-\tau(\theta))\ e^{j2\pi f(\theta)t}\ d\theta \qquad (16)$$

où $\theta_{mp}$ et $\delta\theta_{mp}$ désignent respectivement le centre et la largeur du cône de diffusion associé au $p^{\text{ième}}$ multi-trajet du $m^{\text{ième}}$ émetteur. Les paramètres $\tau(\theta)$, $f(\theta)$ et $\rho(\theta)$ dépendent uniquement de l'azimut $\theta$ du diffuseur. L'équation (5) modélisant un cône de diffusion d'une source avec $L$ diffuseurs devient :

$$\mathbf{x}_{mp}(t) = \sum_{i=1}^{L} \rho_i\ \mathbf{a}(\theta_{mp}+\delta\theta_{mpi})\ s_m(t-\tau_{mp}-\delta\tau_{mpi})\ e^{j2\pi(fmp+\delta fmpi)t} \qquad (17)$$

**1$^{\text{iére}}$ variante**

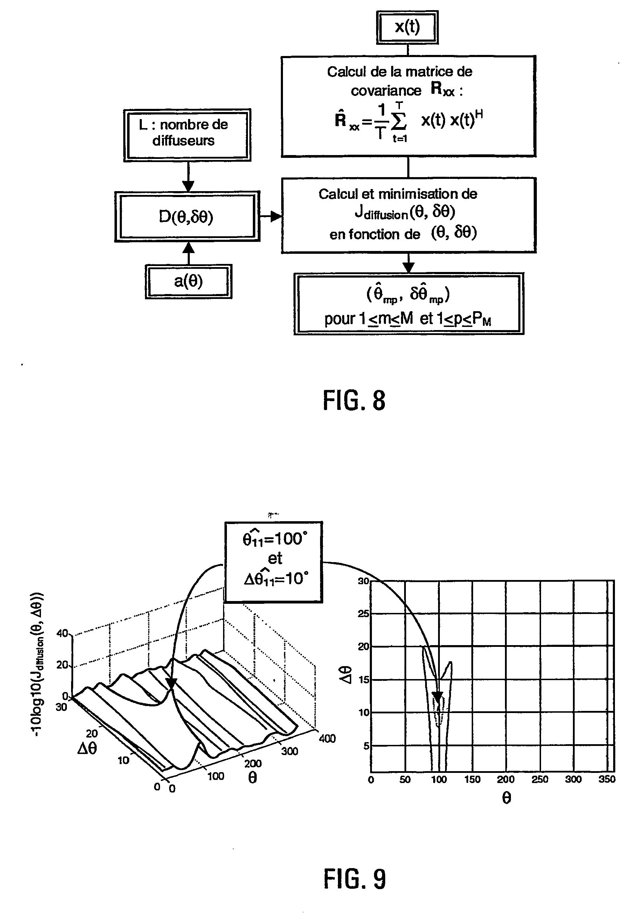

La figure 8 schématise les étapes du procédé pour la goniométrie des sources diffuses en azimut.

L'objectif de la goniométrie 1D de sources diffuses est de déterminer les $M_T$ doublets de paramètres ($\theta_{mp}$, $\delta\theta_{mp}$) qui minimisent le critère $J_{\text{diffusion}}(\theta, \delta\theta)$. Il faut rappeler que $\delta\theta_{mp}=[\delta\theta_{mp1}...\delta\theta_{mp}]^T$ sachant que $\mathbf{u}^T$ désigne le transposé de $\mathbf{u}$. D'après les équations (11)(9) et (8) le critère $J_{\text{diffusion}}(\theta, \delta\theta)$ devient :

$$J_{\text{diffusion}}(\theta, \delta\theta) = \det(\mathbf{Q}_1(\theta, \delta\theta))/\det(\mathbf{Q}_2(\theta, \delta\theta)), \qquad (18)$$

avec $\mathbf{Q}_1(\theta, \delta\theta)= \mathbf{D}(\theta, \delta\theta)^H \Pi_{\mathbf{b}} \mathbf{D}(\theta, \delta\theta)$, $_2(\theta, \delta\theta)= \mathbf{D}(\theta, \delta\theta)^H \mathbf{D}(\theta, \delta\theta)$, et $\mathbf{D}(\theta, \delta\theta)=[\ \mathbf{a}(\theta+\delta\theta_1)\ ...\ \mathbf{a}(\theta+\delta\theta_L)\ ]$

Sur la Figure 9 on simule le cas d'une source diffuse d'incidence moyenne $\theta_{11}=100°$ avec un cône de largeur $\delta\theta_{11}=20°$ sur un réseau circulaire à $N=5$ capteurs de rayon R tel que $R/\lambda=0.8$ ($\lambda$ désigne la longueur d'onde). Sur la figure 9 on applique la méthode en décomposant le cône de diffusion en $L=2$ diffuseurs tel que $\delta\theta=[\Delta\theta - \Delta\theta]^T$. Dans ces conditions, le critère $J_{\text{diffusion}}(\theta, \delta\theta)$ dépend seulement des deux scalaires $\theta$ et $\Delta\theta$. Sur cette figure 9 on trace la fonction - $10\log10(J_{\text{diffusion}}(\theta, \Delta\theta))$ où les maximums correspondent aux estimés des paramètres recherchés.

La Figure 9 montre que la méthode permet bien de trouver le centre du cône de diffusion en $\theta_{11}=100°$ et que le cône allant de l'incidence 80° à 120° se décompose suivant 2 trajets d'incidences $\theta_{11}-\Delta\theta_{11}=90°$ et $\theta_{11}+\Delta\theta_{11}=110°$. Sachant que le paramètre $\Delta\theta_{11}$ traduit une répartition barycentrique des diffuseurs, on en déduit qu'il est forcément inférieur à la largeur du cône $\delta\theta_{11}$.

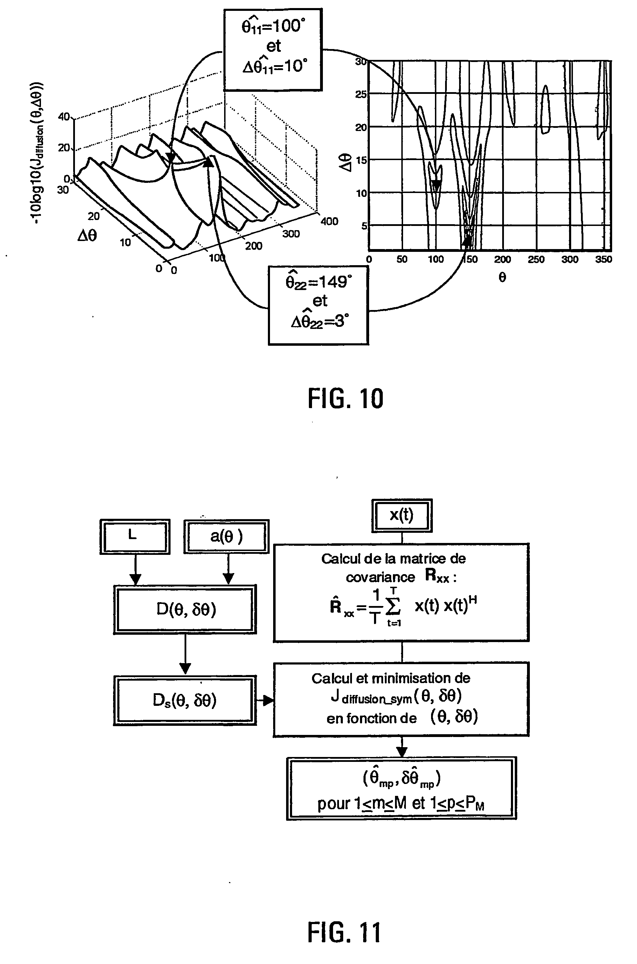

Sur la Figure 10 avec le même réseau de capteurs, on simule le cas de deux sources diffuses d'incidences moyennes $\theta_{11}=100°$ et $\theta_{22}=150°$ avec des cônes de largeur respectif $\delta\theta_{11}=20°$ et $\delta\theta_{22}=5°$. Comme dans le cas de la simulation de la Figure 9, la goniométrie est appliquée avec $L=2$ diffuseurs où $\delta\theta=[\Delta\theta -\Delta\theta]^T$.

La Figure 10 montre que la méthode permet d'estimer avec précision les centres des cônes de diffusion $\theta_{11}$ et $\theta_{22}$ ainsi que les paramètres $\Delta\theta_{11}$ et $\Delta\theta_{22}$ liés au largeur des cônes de diffusion tel que la largeur du cône vérifie : $\delta\theta_{mp}=2\text{x}\Delta\theta_{mp}$.

La figure 11 représente les étapes de la version symétrique de la variante décrite à la figure 8.

Pour une goniométrie en azimut la solution $(\theta,\delta\theta)$ entraîne obligatoirement la solution $(\theta,-\delta\theta)$. De cette remarque on en déduit les deux équations suivantes :

$$\mathbf{c}(\theta, \delta\theta, \alpha)^H \mathbf{E_b} = \mathbf{0},$$

$$\mathbf{c}(\theta, -\delta\theta, \alpha)^H \mathbf{E_b} = \mathbf{0},$$

tel que d'après (6)(8)(18) :

$$\mathbf{c}(\theta, \delta\theta, \ \alpha) = \sum_{j=1}^{L} \alpha_j \, \mathbf{a}(\theta + \delta\theta_j) = \mathbf{D}(\theta, \delta\theta) \, \alpha, \qquad (18\text{-}1)$$

Où la matrice $\mathbf{E_b}$ dépend des $(N\text{-}K)$ vecteurs propres $\mathbf{e}_{MT+i}$ $(1 \leq i \leq N\text{-}K)$ associés aux plus faibles valeurs propres de la matrice de covariance $R_{xx} = E[\mathbf{x}(t)\,\mathbf{x}(t)^H]$ tel que : $\mathbf{E_b} = [\mathbf{e}_{K+1}\ldots\mathbf{e}_N]$. A partir de l'expression (18-1) on en déduit que pour estimer les paramètres $(\theta_{mp}, \delta\theta_{mp})$, il faut chercher les minimums qui annulent le pseudo-spectre suivant :

$$J_{\text{MUSIC\_diff\_sym}}(\theta, \delta\theta, \ \alpha) = \frac{\mathbf{c}_s^{\,H}(\theta, \delta\theta, \alpha) \ \Pi_{bs} \ \mathbf{c}_s(\theta, \delta\theta, \alpha)}{\mathbf{c}_s^{\,H}(\theta, \delta\theta, \alpha) \ \mathbf{c}_s(\theta, \delta\theta, \alpha)},$$

$$\mathbf{c}_s(\theta, \delta\theta, \ \alpha) = \begin{bmatrix} \mathbf{c}(\theta, \delta\theta, \alpha) \\ \mathbf{c}(\theta, -\delta\theta, \alpha) \end{bmatrix} \text{ et } \Pi_{bs} = \frac{1}{2} \mathbf{E}_{bs} \, \mathbf{E}_{bs}^{\,H} \text{ où } \mathbf{E}_{bs} = \begin{bmatrix} \mathbf{E}_b \\ \mathbf{E}_b \end{bmatrix} \quad (18\text{-}2)$$

D'après les expressions (18-1)(18-2), le vecteur $\mathbf{c_s}(\theta, \delta\theta, \alpha)$ peut s'écrire de la façon suivante :

$$\mathbf{c}_s(\theta, \delta\theta, \ \alpha) = \mathbf{D}_s(\theta, \delta\theta) \, \alpha, \qquad (18\text{-}3)$$

avec $\mathbf{D}_s(\theta, \delta\theta) = \begin{bmatrix} \mathbf{D}(\theta, \delta\theta) \\ \mathbf{D}(\theta, -\delta\theta) \end{bmatrix}$,

La minimisation de $J_{\text{MUSIC\_diff\_sym}}(\theta, \delta\theta, \alpha)$ par rapport à $\alpha$ va conduire au critère $J_{\text{diffusion\_sym}}(\theta, \delta\theta)$. Pour obtenir $J_{\text{diffusion\_sym}}(\theta, \delta\theta)$, il suffit de remplacer dans l'expression (18), $\mathbf{D}(\theta, \delta\theta)$ par $\mathbf{D_s}(\theta, \delta\theta)$ et $\Pi_b$ par $\Pi_{bs}$. On obtient ainsi :

$$J_{\text{diffusion-sym}}(\theta, \delta\theta) = \det(\mathbf{Q}_{1s}(\theta, \delta\theta))/\det(\mathbf{Q}_{2s}(\theta, \delta\theta)), \qquad (18\text{-}4)$$

avec $\mathbf{Q}_{1s}(\theta, \delta\theta) = \mathbf{D_s}(\theta, \delta\theta)^H \, \Pi_{bs} \, \mathbf{D_s}(\theta, \delta\theta)$ et $\mathbf{Q}_{2s}(\theta, \delta\theta) = \mathbf{D_s}(\theta, \delta\theta)^H \, \mathbf{D_s}(\theta, \delta\theta)$

On cherche donc les $M_T$ doublets de paramètres $(\theta_{mp}, \delta\theta_{mp})$ qui minimisent le critère $J_{\text{diffusion-sym}}(\theta, \delta\theta)$.

**2$^{\text{iéme}}$ variante**

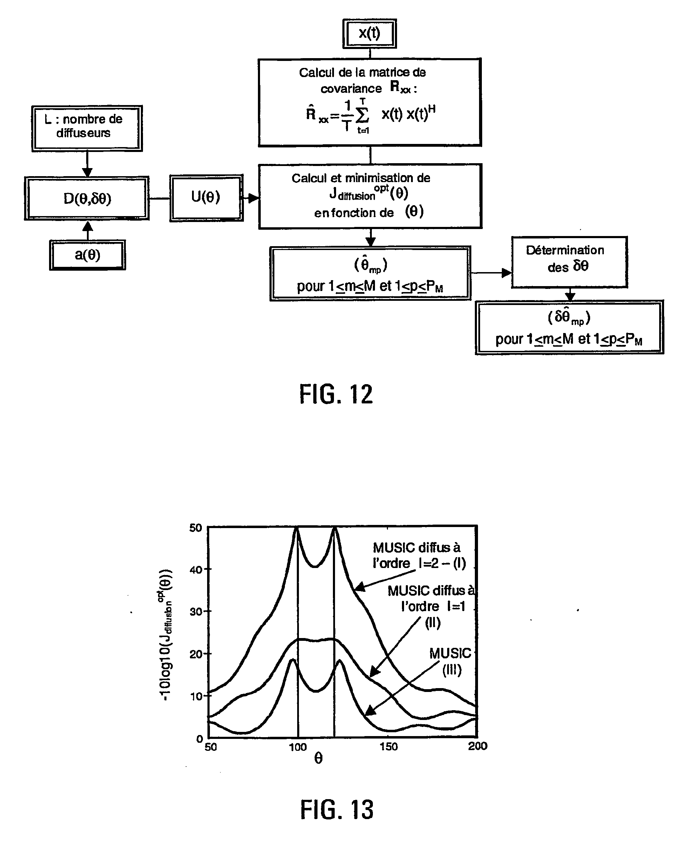

La figure 12 schématise les étapes de la deuxième variante de la goniométrie des sources diffuses en azimut.

En effectuant un développement limité à l'ordre $I$ de $\mathbf{a}(\theta + \delta\theta_i)$ autour de l'incidence centrale $\theta$, l'expression (13) devient la suivante :

$$\mathbf{a}(\theta + \delta\theta_i) = \mathbf{U}(\theta) \, \mathbf{k}(\delta\theta_i) \qquad (19)$$

où $\mathbf{U}(\theta) = \begin{bmatrix} \mathbf{a}(\theta) & \dfrac{\partial \mathbf{a}(\theta)}{\partial\theta} & \cdots & \dfrac{\partial(\mathbf{a}(\theta))^I}{\partial\theta^I} \end{bmatrix}$ et $\mathbf{k}(\delta\theta_i) = \begin{bmatrix} 1 \\ \delta\theta_i \\ \vdots \\ \dfrac{\delta\theta_i^{\,I}}{I!} \end{bmatrix}$

On en déduit que le vecteur $\mathbf{c}(\theta, \delta\theta, \alpha)$ de l'expression (18-1) s'écrit d'après (14) :

$$\mathbf{c}(\theta, \delta\theta, \alpha) = \mathbf{U}(\theta)\beta(\delta\theta, \alpha) \text{ avec } \beta(\delta\theta, \alpha) = \sum_{j=1}^{L} \alpha_j \mathbf{k}(\delta\theta_j), \qquad (19\text{-}1)$$

L'objectif de la 2$^{\text{iéme}}$ variante de la goniométrie 1D de sources diffuses est de déterminer les $M_T$ incidences $\theta_{mp}$ qui minimisent le critère $J_{\text{diffusion}}^{\text{opt}}(\theta)$. D'après les équations (15) et (14) le critère $J_{\text{diffusion}}^{\text{opt}}(\theta)$ devient :

$$J_{\text{diffusion}}^{\text{opt}}(\theta) = \det(\mathbf{Q}_1^{\text{opt}}(\theta))/\det(\mathbf{Q}_2^{\text{opt}}(\theta)), \qquad (20)$$

avec $\mathbf{Q}_1^{\text{opt}}(\theta) = \mathbf{U}(\theta)^H \Pi_\mathbf{b} \mathbf{U}(\theta)$ et $\mathbf{Q}_2^{\text{opt}}(\theta) = \mathbf{U}(\theta)^H \mathbf{U}(\theta)$

$$\text{et } \beta(\delta\theta, \alpha) = \sum_{j=1}^{L} \alpha_j \mathbf{k}(\delta\theta_j),$$

Pour déterminer les vecteurs $\delta\theta_{mp}$ il faut estimer le vecteur $\beta(\delta\theta_{mp}, \alpha)$ : Pour cela il suffit de chercher le vecteur propre associé à la valeur propre minimale de $\mathbf{Q}_2^{\text{opt}}(\theta_{mp})^{-1} \mathbf{Q}_1^{\text{opt}}(\theta_{mp})$.

Sur la Figure 13 on compare les performances de MUSIC avec celles de la 2$^{\text{ième}}$ variante de MUSIC diffus pour $l$=1 et $l$=2. Le réseau de capteurs est celui de la figure 9 et de la figure 10. On simule le cas de deux sources diffuses d'incidence moyenne $\theta_{11}$=100° et $\theta_{22}$=120° avec des cônes de largeur respective $\delta\theta_{11}$=20° et $\delta\theta_{22}$=20°. On rappelle que les $M_T$ maximums de la fonction -10log10($J_{\text{diffusion}}^{\text{opt}}(\theta)$) sont les estimées des incidences $\theta_{mp}$ recherchées. Les courbes de la Figure 13 montrent que plus l'ordre $l$ du développement limité augmente, plus les 2 maximums du critère ont un niveau fort car on se rapproche d'une bonne adéquation du modèle. Dans le tableau-1 on donne les estimés des incidences pour les trois méthodes.

*Tableau-1 : Goniométrie en azimut d'une source diffuse (*$\theta_{11}$=100° $\theta_{22}$=120° avec un cône de *largeur* $\delta\theta_{11}$=20° $\delta\theta_{22}$=20°*) avec la 2$^{\text{ième}}$ variante*

|  | $\hat{\theta}_{11}$ sachant que $\theta_{11}$=100° | $\hat{\theta}_{22}$ sachant que $\theta_{22}$=120° |
|---|---|---|
| MUSIC classique ($l$=0) | 97 | 123.1 |
| MUSIC diffus ($l$=1) | 101.7 | 118 |
| MUSIC diffus ($l$=2) | 99.2 | 120.6 |

Le tableau-1 confirme que le biais d'estimation d'incidence le plus faible est obtenu pour $l$=2, c'est à dire pour la méthode MUSIC diffus d'ordre d'interpolation du vecteur directeur le plus élevé. La simulation de la figure-10 et du tableau-1 est obtenue pour un étalement temporel des deux sources nul. Plus exactement les retards $\delta\tau_{11i}$ et $\delta\tau_{22i}$ de (17) des diffuseurs sont nuls. Dans la simulation du Tableau-2 et de la Figure-11 on reprend la configuration précédente en introduisant un étalement temporel de 1 période d'échantillonnage $T_e$ tel que :

$$\max_i (\delta\tau_{mmi}) - \min_i (\delta\tau_{mmi}) = T_e$$

*Tableau-2 : Goniométrie en azimut de sources diffuses partiellement corrélées* $\theta_{11}$=100° $\theta_{22}$=120° *avec un cône de largeur* $\delta\theta_{11}$=20° $\delta\theta_{22}$=20° *avec la 2$^{\text{ième}}$ variante*

|  | $\hat{\theta}_{11}$ sachant que $\theta_{11}$=100° | $\hat{\theta}_{22}$ sachant que $\theta_{22}$=120° |
|---|---|---|
| MUSIC classique ($l$=0) | 96.2 | 124.3 |
| MUSIC diffus ($l$=2) | 98.1 | 121.5 |

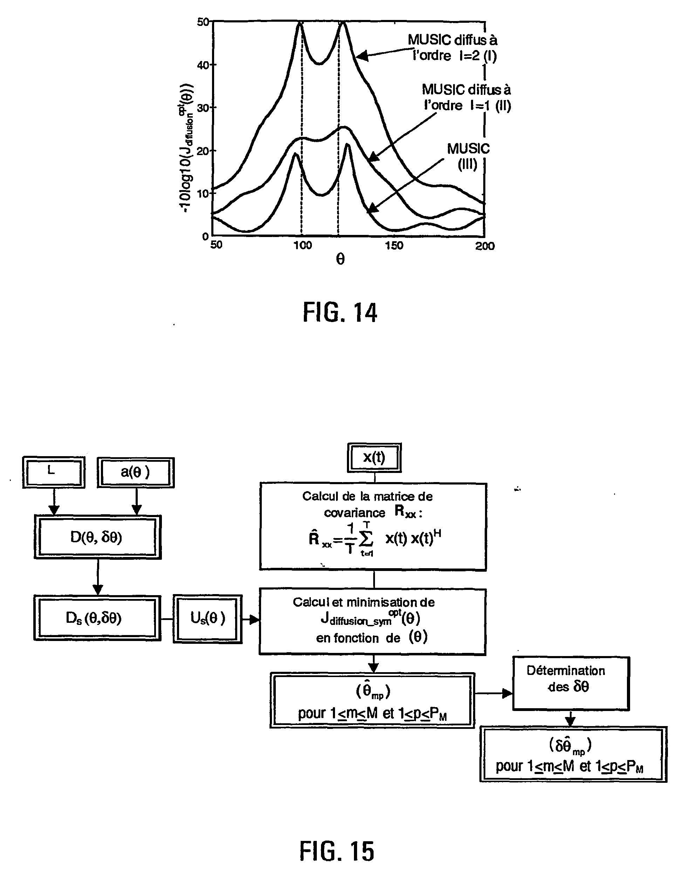

Les résultats du Tableau-2 et de la figure 14 montrent que les méthodes envisagées dans cette invention prennent en compte les configurations de diffuseurs partiellement corrélés.

Dans cette deuxième variante on peut comme dans la première variante prendre en compte la symétrie des solutions afin de lever un certain nombre d'ambiguïtés. Pour cela il faut tout d'abord remarquer que d'après (19)(19-1):

$$\mathbf{c}(\theta,-\delta\theta;\alpha) = \mathbf{U}_1(\theta)\ \beta(\delta\theta,\alpha)\ \ \text{avec}\ \mathbf{U}_1(\theta)=[\ \mathbf{a}(\theta) - \frac{\partial \mathbf{a}(\theta)}{\partial\theta}\ \ldots(-1)^I\ \frac{\partial(\mathbf{a}(\theta))^I}{\partial\theta^I}\ ]\quad (20\text{-}1)$$

On en déduit d'après (18-1)(18-2) une nouvelle expression du vecteur $\mathbf{c}_s(\theta, \delta\theta, \alpha)$:

$$\mathbf{c}_s(\theta, \delta\theta, \alpha) = \mathbf{U}_s(\theta)\ \beta(\delta\theta,\alpha)\ \ \text{et}\ \ \mathbf{U}_s(\theta)= \begin{bmatrix} \mathbf{U}(\theta,\alpha) \\ \mathbf{U}_1(\theta,\alpha) \end{bmatrix}\quad (20\text{-}2)$$

En remplaçant dans l'équation (20) $\mathbf{U}_s(\theta)$ par $\mathbf{U}(\theta)$ et $\Pi_\mathbf{b}$ par $\Pi_\mathbf{bs}$, on en déduit d'après (18-2)(18-4) que pour estimer les $M_T$ incidences ($\theta_{mp}$) il suffit de minimiser le critère mono-dimensionnel suivant :

$$\mathbf{J}_{\text{diffusion\_sym}}^{\text{opt}}(\theta)\ = \det(\mathbf{Q}_{1s}^{\text{opt}}(\theta))/\det(\mathbf{Q}_{2s}^{\text{opt}}(\theta)),\quad (20\text{-}3)$$

avec $\mathbf{Q}_{1s}^{\text{opt}}(\theta)=\mathbf{U}_s(\theta)^H\ \Pi_\mathbf{bs}\ \mathbf{U}_s(\theta)$ et $\mathbf{Q}_{2s}^{\text{opt}}(\theta)=\mathbf{U}_s(\theta)^H\ \mathbf{U}_s(\theta)$,

Cette version symétrique de la deuxième variante de la goniométrie des sources diffuses en azimut se résume dans la Figure 15.

[1] RO.SCHMIDT "A signal subspace approach to multiple emitter location and spectral estimation», PhD thesis, stanford university CA, November 1981.

[2] FERRARA, PARKS "Direction finding with an array of antennas having diverse polarizations", IEEE trans on antennas and propagation, mars 1983.

[2] S.VALAE, B.CHAMPAGNE and P.KABAL « Parametric Localization of Distributed Sources », IEEE trans on signal processing, Vol 43 n°9 septembre 1995.

[3] D.ASZTELY, B.OTTERSTEN and AL. SWINDLEHURST « A Generalized array manifold model for local scattering in wireless communications», Proc of ICASSP, pp 4021-4024, Munich 1997.

[4] M.BENGTSSON and B.OTTERSTEN « Low-Complexity Estimators for Distributed Sources», trans on signal processing, vol 48, n°8, août 2000.

**Revendications**

1. Procédé de goniométrie d'une ou de plusieurs sources diffuses, la ou les sources étant **caractérisées par** une ou des directions données et par un cône de diffusion et reçues par un réseau de plusieurs capteurs, **caractérisé en ce qu'**il comporte au moins les étapes suivantes :

   a) décomposer le cône de diffusion en un nombre fini L de diffuseurs, à un diffuseur sont associés les paramètres $(\theta_{mp}, \delta\theta_{mpi}, \Delta_{mp}, \delta\Delta_{mpi})$, où $\theta_{mp}$, est l'angle d'incidence en azimuth pour le mième émetteur et le pième multitrajets, $\delta\theta_{mpi}$, est le décalage d'angle d'incidence en azimut pour le mième émetteur et le pième multitrajets et le ième diffuseur, $\Delta_{mp}$, l'angle d'incidence en élévation pour le mième émetteur et le pième multitrajets, et $\delta\Delta_{mpi}$ le décalage d'angle d'incidence en élévation pour le mième émetteur et le pième multitrajets et le ième diffuseur, la décomposition étant effectuée en mettant en oeuvre

$$\mathbf{x}_{mp}(t) = \sum_{i=1}^{L}\ \rho_i\ \mathbf{a}(\theta_{mp}+\delta\theta_{mpi}, \Delta_{mp}+\delta\Delta_{mpi})\ \mathbf{s}_m(t-\tau_{mp}-\delta\tau_{mpi})\ e^{j2\pi\,(fmp+\,\delta fmpi\,)\,t}$$

en considérant que la source élémentaire est le diffuseur d'incidence ($\theta_{mp}+\delta\theta_{mpi}, \Delta_{mp}+\delta\Delta_{mpi}$) associé au $i$ième

diffuseur du $p^{\text{ième}}$ multi-trajet du $m^{\text{ième}}$ émetteur,

b) décomposer le cône de diffusion en L diffuseurs élémentaires et combiner les vecteurs directeurs $\mathbf{a}(\theta_{mp}+\delta\theta_{mpi}, \Delta_{mp}+\delta\Delta_{mpi})$ associés aux L diffuseurs pour obtenir un vecteur ($\mathbf{D}(\theta, \Delta, \delta\theta, \delta\Delta)\,\alpha$ ou $\mathbf{U}(\theta, \Delta)\,\beta(\delta\theta, \delta\Delta, \alpha)$) avec $\mathbf{D}(\theta, \Delta, \delta\theta, \delta\Delta)=[\mathbf{a}(\theta_{mp}+\delta\theta_{mp1}, \Delta_{mp}+\delta\Delta_{mp1}) ... \mathbf{a}(\theta_{mp}+\delta\theta_{mpL}, \Delta_{mp}+\delta\Delta_{mpL})]$ et

$$\mathsf{U}(\theta,\ \varDelta\ )=[\ \ \mathbf{a}(\theta,\varDelta)\ \ \ \frac{\partial\mathbf{a}(\theta,\varDelta)}{\partial\theta}\ \ \ \frac{\partial\mathbf{a}(\theta,\varDelta)}{\partial\varDelta}\ ...]$$ dépendant au moins d'un des paramètres d'incidences et de déviation ($\theta, \Delta, \delta\theta, \delta\Delta$) et du vecteur de combinaison $\alpha$,

c) appliquer un critère de type MUSIC ou tout autre algorithme de goniométrie aux vecteurs $\mathbf{c}(\theta, \Delta, \delta\theta, \delta\Delta, \alpha)$ $=\mathbf{D}(\theta, \Delta, \delta\theta, \delta\Delta)\,\alpha$ ou $\mathbf{c}(\theta, \Delta, \delta\theta, \delta\Delta, \alpha) =\mathbf{U}(\theta, \Delta)\,\beta(\delta\theta, \delta\Delta, \alpha)$ obtenu à l'étape b) afin de déterminer au moins un des paramètres d'incidences $\theta_{mp}, \Delta_{mp}, \delta\theta_{mp}, \delta\Delta_{mp}$ du cône de diffusion associé.

2. Procédé de goniométrie selon la revendication 1 **caractérisé en ce que** l'étape de minimisation est effectuée sur le vecteur $\mathbf{D}_s(\theta, \Delta, \delta\theta, \delta\Delta)\alpha$ ou $\mathbf{U}_s(\theta, \Delta)\beta(\delta\theta, \delta\Delta, \alpha)$ où les matrices $\mathbf{D}_s(\theta, \Delta, \delta\theta, \delta\theta)$ et $\mathbf{U}_s(\theta, \Delta)$ dépendent respectivement de $\mathbf{D}(\theta, \Delta, \delta\theta, \delta\Delta)$ et $\mathbf{U}(\theta, \Delta)$ et où les paramètres $\delta\theta$ et/ou $\delta\Delta$ sont remplacés par leurs opposés dans $\mathbf{c}(\theta, \Delta, \delta\theta, \delta\Delta, \alpha)$ de façon a respecter les symétries du cône de diffusion.

3. Procédé de goniométrie selon la revendication 1 **caractérisé en ce que** la matrice $\mathbf{D}(\theta, \delta\theta)$ dépend uniquement de l'angle d'azimut $\theta$ et du vecteur de déviation $\delta\theta$ de cet angle.

4. Procédé de goniométrie selon la revendication 3 **caractérisé en ce que** l'étape de minimisation est effectuée sur la matrice $\mathbf{D}_s(\theta, \delta\theta)$ où le paramètre $\delta\theta$ est remplacé par son opposé dans $\mathbf{c}(\theta, \delta\theta, \alpha)$.

5. Procédé de goniométrie selon la revendication 4 **caractérisé en ce qu'**il comporte une étape de développement limité des vecteurs de la matrice $\mathbf{D}(\theta, \delta\theta)$, l'étape de minimisation étant effectuée sur une matrice $\mathbf{U}(\theta)$ afin de déterminer les paramètres d'angle d'incidence $\theta_{mp}$ et à partir de ces paramètres les paramètres de décalage d'angle $\delta\theta_{mp}$.

6. Procédé de goniométrie selon les revendications 4 et 5 **caractérisé en ce que** l'étape de minimisation est effectuée sur le vecteur $\mathbf{U}_s(\theta)\beta(\delta\theta, \alpha)$ où la matrice $\mathbf{U}_s(\theta)$ est obtenue à partie de la matrice $\mathbf{U}(\theta)$ où le paramètre $\delta\theta$ est remplacé par son opposé dans $\mathbf{c}(\theta, \delta\theta, \alpha)= \mathbf{U}(\theta)\beta(\delta\theta, \alpha)$ .

**Claims**

1. Goniometry method for one or several distributed sources, the source or sources being **characterized by** one or more given directions and by a diffusion cone and received by an array of several sensors, **characterized in that** it comprises at least the following steps:

   a) breaking down the diffusion cone into a finite number L of diffusers, a diffuser having the parameters ($\theta_{mp}$, $\delta\theta_{mpi}, \Delta_{mp}, \delta\Delta_{mpi}$), associated with it, where $\theta_{mp}$, is the azimuthal angle of incidence to the m-th transmitter and the p-th multipath, $\delta\theta_{mpi}$, is the offset in azimuthal angle of incidence for the m-th transmitter and the p-th multipath and the i-th diffuser, $\Delta_{mp}$, the elevational angle of incidence for the m-th transmitter and the p-th multipath, and $\delta\Delta_{mpi}$ the offset in elevational angle of incidence for the m-th transmitter and the p-th multipath and the i-th diffuser, the breakdown being performed by implementing

$$\mathbf{x}_{mp}(t) = \sum_{i=1}^{L}\ \rho_i\ \mathbf{a}(\theta_{mp}+\delta\theta_{mpi}, \Delta_{mp}+\delta\Delta_{mpi})$$

$$s_m(t-\tau_{mp}-\delta\tau_{mpi})\,e^{j2\pi(f_{mp}+\delta f_{mpi})t}$$

considering the elementary source to be the diffuser with incidence ($\theta_{mp} + \delta\theta_{mpi}, \Delta_{mp} + \delta\Delta_{mpi}$) associated with

the ith diffuser of the pth multipath of the mth transmitter,

b) breaking down the diffusion cone into L elementary diffusers and combining the directing vectors a($\theta_{mp}$+$\delta\theta_{mpi}$, $\Delta_{mp}$+$\delta\Delta_{mpi}$) associated with the L diffusers to obtain a vector (**D**($\theta$, $\Delta$, $\delta\theta$, $\delta\Delta$) $\alpha$ or **U**($\theta$, $\Delta$) $\beta$($\delta\theta$, $\delta\Delta$, $\alpha$)) with **D**($\theta$, $\Delta$, $\delta\theta$, $\delta\Delta$) = [a($\theta_{mp}$ + $\delta\theta_{mp1}$, $\Delta_{mp}$ + $\delta\Delta_{mp1}$) $\cdots$ a($\theta_{mp}$ + $\delta\theta_{mpL}$, $\Delta_{mp}$ + $\delta\Delta_{mpL}$)] and

$$\mathbb{U}(\theta, \quad \Delta) = [\mathbf{a}(\theta, \quad \Delta) \quad \frac{\partial a(\theta,\Delta}{\partial\theta} \quad \frac{\partial a(\theta,\Delta}{\partial\Delta} \cdots]$$ dependent on at least one of the incidence and deflection parameters ($\theta$, $\Delta$, $\delta\theta$, $\delta\Delta$) and on the combination vector $\alpha$,

c) applying a MUSIC-type criterion or any other goniometry algorithm to the vectors **c**($\theta$, $\Delta$, $\delta\theta$, $\delta\Delta$, $\alpha$) **= D**($\theta$, $\Delta$, $\delta\theta$, $\delta\Delta$)$\alpha$ or **c**($\theta$, $\Delta$, $\delta\theta$, $\delta\Delta$, $\alpha$) = **U**($\theta$,$\Delta$) $\beta$($\delta\theta$, $\delta\Delta$, $\alpha$) obtained in the step b) in order to determine at least one of the incidence parameters $\theta mp$, $\Delta_{mp}$, $\delta\theta_{mp}$, $\delta\Delta_{mp}$ of the associated diffusion cone.

2. Goniometry method according to Claim 1, **characterized in that** the minimization step is performed on the vector **D$_s$**($\theta$, $\Delta$, $\delta\theta$, $\delta\Delta$)$\alpha$ or **U$_s$**($\theta$, $\Delta$)$\beta$($\delta\theta$, $\delta\Delta$, $\alpha$) where the matrices **D$_s$**($\theta$, $\Delta$, $\delta\theta$, $\delta\Delta$) and (**U$_s$**($\theta$, $\Delta$) are dependent respectively on **D**($\theta$, $\Delta$, $\delta\theta$, $\delta\Delta$) and **U**($\theta$, $\Delta$) and where the parameters $\delta\theta$ and/or $\delta\Delta$ are replaced by their opposites in **c**($\theta$, $\Delta$, $\delta\theta$, $\delta\Delta$, $\alpha$) so as to comply with the symmetries of the diffusion cone.

3. Goniometry method according to Claim 1, **characterized in that** the matrix **D**($\theta$, $\delta\theta$) depends only on the azimuth angle $\theta$ and on the deflection vector $\delta\theta$ of this angle.

4. Goniometry method according to Claim 3, **characterized in that** the minimizing step is performed on the matrix **D$_s$**($\theta$, $\delta\theta$), where the parameter $\delta\theta$ is replaced by its opposite in **c**($\theta$, $\delta\theta$, $\alpha$).

5. Goniometry method according to Claim 4, **characterized in that** it comprises a step of limited development of the vectors of the matrix **D**($\theta$, $\delta\theta$), the minimizing step being performed on a matrix **U**($\theta$) in order to determine the incidence angle parameters $\theta_{mp}$ and, from these parameters, the angle offset parameters $\delta\theta_{mp}$.

6. Goniometry method according to Claims 4 and 5, **characterized in that** the minimization step is performed on the vector **U$_s$**($\theta$)$\beta$($\delta\theta$, $\alpha$) where the matrix **U$_s$**($\theta$) is obtained from the matrix **U**($\theta$) where the parameter $\delta\theta$ is replaced by its opposite in **c**($\theta$, $\delta\theta$, $\alpha$) **= U**($\theta$)$\beta$($\delta\theta$, $\alpha$).

**Patentansprüche**

1. Verfahren der Goniometrie einer oder mehrerer diffuser Quellen, wobei die Quelle(n) durch eine gegebene Richtung oder gegebene Richtungen und durch einen Diffusionskegel **gekennzeichnet** sind und von einem Netz von mehreren Sensoren empfangen werden, **dadurch gekennzeichnet, dass** es mindestens die folgenden Schritte aufweist:

a) Zerlegen des Diffusionskegels in eine endliche Zahl L von Diffusoren, wobei einem Diffusor die Parameter ($\theta_{mp}$, $\delta\theta_{mpi}$, $\Delta_{mp}$, $\delta\Delta_{mpi}$) zugeordnet sind, wobei $\theta_{mp}$ der Einfallswinkel in Azimutrichtung für den m-ten Emitter und den p-ten Mehrpfad, $\delta\theta_{mpi}$ die Verschiebung des Einfallswinkels in Azimutrichtung für den m-ten Emitter und den p-ten Mehrpfad und den i-ten Diffusor, $\Delta_{mp}$ der Einfallswinkel in Elevationsrichtung für den m-ten Emitter und den p-ten Mehrpfad, und $\delta\Delta_{mpi}$ die Verschiebung des Einfallswinkels in Elevationsrichtung für den m-ten Emitter und den p-ten Mehrpfad und den i-ten Diffusor ist, wobei die Zerlegung durchgeführt wird, indem angewendet wird

$$\mathbf{x}_{mp}(t) = \sum_{i=1}^{L} \rho_i \, \mathbf{a}(\theta_{mp}+\delta\theta_{mpi}, \Delta_{mp}+\delta\Delta_{mpi})$$

$$s_m(t-\tau_{mp}-\delta\tau_{mpi}) \, e^{j2\pi(f_{mp}+\delta f_{mpi})t}$$

unter der Annahme, dass die Elementarquelle der Einfallsdiffusor ($\theta_{mp}+\delta\theta_{mpi}$, $\Delta_{mp}+\delta\Delta_{mpi}$) ist, der dem i-ten Diffusor des p-ten Mehrpfads des m-ten Emitters zugeordnet ist,
b) Zerlegen des Diffusionskegels in L Elementardiffusoren und Kombinieren der Richtvektoren a ($\theta_{mp}+\delta\theta_{mpi}$, $\Delta_{mp}+\delta\Delta_{mpi}$), die den L Diffusoren zugeordnet sind, um einen Vektor (D($\theta,\Delta,\delta\theta,\delta\Delta$)$\alpha$ oder U($\theta,\Delta$)$\beta$($\delta\theta,\delta\Delta,\alpha$)) mit D($\theta,\Delta,\delta\theta,\delta\Delta$)=[a($\theta_{mp}+\delta\theta_{mpl}$, $\Delta_{mp}+\delta\Delta_{mpl}$) ... a(($\theta_{mp}+\delta\theta_{mpl}$, $\Delta_{mp}+\delta_{\Delta mpL}$)] und

$$U(\theta,\Delta) = [a(\theta,\Delta) \; \frac{\partial a(\theta,\Delta)}{\partial\theta} \frac{\partial a(\theta,\Delta)}{\partial\Delta} \quad \ldots] \text{ zu erhalten, der von mindestens einem der Einfalls- und}$$

Abweichungsparameter ($\theta,\Delta,\delta\theta,\delta\Delta$) und vom Kombinationsvektor $\alpha$ abhängt,
c) ein Kriterium vom Typ MUSIC oder jeden anderen Goniometrie-Algorithmus an die Vektoren c($\theta,\Delta,\delta\theta,\delta\Delta,\alpha$) =D($\theta,\Delta,\delta\theta,\delta\Delta$)$\alpha$ oder c($\theta,\Delta,\delta\theta,\delta\Delta,\alpha$)=u($\theta,\Delta$)$\beta$($\delta\theta,\delta\Delta,\alpha$) anzuwenden, die im Schritt b) erhalten werden, um mindestens einen der Einfallsparameter $\theta_{mp}$, $\Delta_{mp}$, $\delta\theta_{mp}$, $\delta\Delta_{mp}$ des zugeordneten Diffusionskegels zu bestimmen.

2. Goniometrieverfahren nach Anspruch 1, **dadurch gekennzeichnet, dass** der Minimierungsschritt am Vektor D$_s$ ($\theta,\Delta,\delta\theta,\delta\Delta$)$\alpha$ oder U$_s$($\theta,\Delta$)$\beta$($\delta\theta,\delta\Delta,\alpha$) durchgeführt wird, wobei die Matrizen D$_s$($\theta,\Delta,\delta\theta,\delta\Delta$) und U$_s$($\theta,\Delta$) von D($\theta,\Delta,\delta\theta,\delta\Delta$) bzw. U($\theta,\Delta$) abhängen, und wobei die Parameter $\delta\theta$ und/oder $\delta\Delta$ durch ihre Gegenteile in c($\theta,\Delta,\delta\theta,\delta\Delta,\alpha$) ersetzt werden, um die Symmetrien des Diffusionskegels zu beachten.

3. Goniometrieverfahren nach Anspruch 1, **dadurch gekennzeichnet, dass** die Matrix D($\theta,\delta\theta$) nur von dem Azimutwinkel $\theta$ und vom Abweichungsvektor $\delta\theta$ dieses Winkels abhängt.

4. Goniometrieverfahren nach Anspruch 3, **dadurch gekennzeichnet, dass** der Minimierungsschritt an der Matrix D$_s$($\delta\theta$) durchgeführt wird, wobei der Parameter $\delta\theta$ durch sein Gegenteil in c($\theta,\delta\theta,\alpha$) ersetzt wird.

5. Goniometrieverfahren nach Anspruch 4, **dadurch gekennzeichnet, dass** es einen Schritt der begrenzten Entwicklung der Vektoren der Matrix D($\theta,\delta\theta$) aufweist, wobei der Minimierungsschritt an einer Matrix U($\theta$) durchgeführt wird, um die Einfallswinkelparameter $\theta_{mp}$ und ausgehend von diesen Parametern die Winkelverschiebungsparameter $\delta\theta_{mp}$ zu bestimmen.

6. Goniometrieverfahren nach den Ansprüchen 4 und 5, **dadurch gekennzeichnet, dass** der Minimierungsschritt am Vektor U$_s$($\theta$)$\beta$($\delta\theta,\alpha$) durchgeführt wird, wobei die Matrix U$_s$($\theta$) ausgehend von der Matrix U($\theta$) erhalten wird, wobei der Parameter $\delta\theta$ durch sein Gegenteil in c($\theta,\delta\theta,\alpha$)= U($\theta$)$\beta$($\delta\theta,\alpha$) ersetzt wird.

Cône de diffusion d'incidence $\Delta_0$ et de largeur $\delta\Delta_0$

Neige - N

Système de réception et goniométrie

Diffuseurs: grains de neige $N_\alpha$

$\Delta_0$

$M_i$

**FIG. 1**

Emetteur n°2
4

Emetteur n°1
3

$K(\theta_{11})$ et $K(\theta_2)$
Vecteurs d'onde

Capteur Elémentaire
2

Traitement d'antennes
5

Réseau d'antennes
1

$K(\theta_2)$

$K(\theta_{11})$

$K(\theta_{12})$

$\theta_{11}$

$\theta_{12}$

**FIG. 2**

Plan des antennes

$\theta_m$

$\Delta_m$

$k(\theta_m, \Delta_m)$

**FIG. 3**

$$x(t)$$

Calcul de la matrice de covariance $\mathbf{R_{xx}}$ :

$$\hat{\mathbf{R}}_{xx} = \frac{1}{T} \sum_{t=1}^{T} x(t)\, x(t)^{H}$$

L : nombre de diffuseurs

$$D(\theta, \Delta, \delta\theta, \delta\Delta)$$

Calcul et minimisation de $J_{diffusion}(\theta, \Delta, \delta\theta, \delta\Delta)$ en fonction de $(\theta, \Delta, \delta\theta, \delta\Delta)$

$$a(\theta, \Delta)$$

$$(\hat{\theta}_{mp}, \hat{\Delta}_{mp}\, \delta\hat{\theta}_{mp}, \delta\hat{\Delta}_{mp})$$ pour $1 \le m \le M$ et $1 \le p \le P_M$

## FIG. 4

$$x(t)$$

L

$$a(\theta, \Delta)$$

Calcul de la matrice de covariance $\mathbf{R_{xx}}$ :

$$\hat{\mathbf{R}}_{xx} = \frac{1}{T} \sum_{t=1}^{T} x(t)\, x(t)^{H}$$

$$D(\theta, \Delta, \delta\theta, \delta\Delta)$$

$$D_s(\theta, \Delta, \delta\theta, \delta\Delta)$$

Calcul et minimisation de $J_{diffusion\_sym}(\theta, \Delta, \delta\theta, \delta\Delta)$ en fonction de $(\theta, \Delta, \delta\theta, \delta\Delta)$

$$(\hat{\theta}_{mp}, \hat{\Delta}_{mp}\, \delta\hat{\theta}_{mp}, \delta\hat{\Delta}_{mp})$$ pour $1 \le m \le M$ et $1 \le p \le P_M$

## FIG. 5

x(t)

Calcul de la matrice de covariance $R_{xx}$ :

$$\hat{R}_{xx} = \frac{1}{T}\sum_{t=1}^{T} x(t)\,x(t)^H$$

L : nombre de diffuseurs

$D(\theta, \Delta, \delta\theta, \delta\Delta)$

$U(\theta, \Delta)$

$a(\theta, \Delta)$

Calcul et minimisation de $J_{diffusion}^{opt}(\theta, \Delta)$ en fonction de $(\theta, \Delta)$

$(\hat{\theta}_{mp}, \hat{\Delta}_{mp})$ pour $1 \leq m \leq M$ et $1 \leq p \leq P_M$

Détermination des $\delta\theta$ et $\Delta\delta$

$(\theta\hat{\delta}_{mp}, \Delta\hat{\delta}_{mp})$ pour $1 \leq m \leq M$ et $1 \leq p \leq P_M$

## FIG. 6

L

$a(\theta, \Delta)$

x(t)

Calcul de la matrice de covariance $R_{xx}$ :

$$\hat{R}_{xx} = \frac{1}{T}\sum_{t=1}^{T} x(t)\,x(t)^H$$

$D(\theta, \Delta, \delta\theta, \delta\Delta)$

$D_s(\theta, \Delta, \delta\theta, \delta\Delta)$

$U_s(\theta, \Delta)$

Calcul et minimisation de $J_{diffusion\_sym}^{opt}(\theta, \Delta)$ en fonction de $(\theta, \Delta)$

$(\hat{\theta}_{mp}, \hat{\Delta}_{mp})$ pour $1 \leq m \leq M$ et $1 \leq p \leq P_M$

Détermination des $\theta\delta$ et $\delta\Delta$

$(\delta\hat{\theta}_{mp}, \delta\hat{\Delta}_{mp})$ pour $1 \leq m \leq M$ et $1 \leq p \leq P_M$

## FIG. 7

x(t)

Calcul de la matrice de covariance $\mathbf{R}_{xx}$ :

$$\hat{\mathbf{R}}_{xx} = \frac{1}{T} \sum_{t=1}^{T} x(t) \, x(t)^{H}$$

L : nombre de diffuseurs

$D(\theta, \delta\theta)$

$a(\theta)$

Calcul et minimisation de $J_{\text{diffusion}}(\theta, \delta\theta)$ en fonction de $(\theta, \delta\theta)$

$(\hat{\theta}_{mp}, \, \delta\hat{\theta}_{mp})$ pour $1 \leq m \leq M$ et $1 \leq p \leq P_M$

## FIG. 8

$\hat{\theta}_{11} = 100°$ et $\Delta\hat{\theta}_{11} = 10°$

## FIG. 9

**FIG. 10**

**FIG. 11**

**FIG. 12**

**FIG. 13**

FIG. 14

FIG. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RO.SCHMIDT.** A signal subspace approach to multiple emitter location and spectral estimation. *PhD thesis,* Novembre 1981
- **FERRARA ; PARKS.** Direction finding with an array of antennas having diverse polarizations. *IEEE trans on antennas and propagation,* Mars 1983
- **S.VALAE ; B.CHAMPAGNE ; P.KABAL.** Parametric Localization of Distributed Sources. *IEEE trans on signal processing,* Septembre 1995, vol. 43 (9

- **D.ASZTELY ; B.OTTERSTEN ; AL. SWINDLE-HURST.** A Generalized array manifold model for local scattering in wireless communications. *Proc of ICASSP,* 1997, 4021-4024
- **M.BENGTSSON ; B.OTTERSTEN.** Low-Complexity Estimators for Distributed Sources. *trans on signal processing,* Août 2000, vol. 48 (8